# EUROPEAN PATENT SPECIFICATION

(11) **EP 3 029 659 B1**
(45) Date of publication and mention of the grant of the patent: **28.03.2018**
(21) Application number: 15734285.8
(22) Date of filing: 12.03.2015
(51) Int. Cl.: B29D 11/00, G02B 3/00, G02B 27/22, G09F 19/14, G03B 35/24

(54) **DISPLAY PROVIDED WITH PARTIAL OPTICAL ELEMENT ARRAY**
ANZEIGE MIT TEILWEISER ANORDNUNG VON OPTISCHEN ELEMENTEN
AFFICHEUR À RÉSEAU PARTIEL D'ÉLÉMENTS OPTIQUES

(30) Priority: 10.10.2014 JP 2014209281
(43) Date of publication of application: 08.06.2016
(73) Proprietor: Grapac Japan Co., Inc., Tokyo 131-0034 (JP)
(72) Inventor: YUMOTO Yoshihide, Tokyo 131-0034 (JP)
(74) Representative: Beckord & Niedlich Patentanwälte PartG mbB
(86) International application number: PCT/JP2015/057332
(87) International publication number: WO 2016/056262

(56) References cited:
- EP-A1- 2 386 899
- EP-A2- 1 629 994
- JP-A- H1 086 568
- JP-A- 2001 166 402
- JP-A- 2006 001 153
- JP-A- 2006 251 608
- JP-A- 2008 275 970
- JP-A- 2009 116 011
- JP-A- 2009 255 320
- JP-B1- S3 920 284
- JP-B2- 5 224 489
- JP-U- S6 049 593
- JP-Y1- S3 827 023
- JP-Y2- H 051 213
- US-A1- 2012 140 333

## Description

### Technical Field

The present invention relates to an image formation forming body that enables an optic effect by optical elements to be observed. The present invention more particularly relates to a display body including a partially-provided optical element array formed by a method for forming a partially-provided optical element array, the display body having an optical element array partially provided at a portion corresponding to a portion where an image is formed for producing an optic effect through interaction with the optical element array, the method for forming a partially-provided optical element, and a display body manufacturing system.

### Background Art

Various types of document such as identity cards, credit cards etc. can be augmented by visual elements as described in US 2012/0140333 A1 and EP 1 629 994 A2, which disclose ways of forming these kinds of visual element. There is a display technique enabling virtual images to be observed by using eyesight of observers, the virtual images including variable images, such as moving and changing images, videos, or stereoscopic images (Patent Literature 1). Examples of the display body include an integrated object formed by pasting, with adhesives, a lenticular sheet constituted of a plurality of cylindrical lens arrays or a planoconvex lens sheet constituted of a plurality of planoconvex lens arrays to a sheet having an image of designs, characters, and the like being printed thereon.

### Citation List

### Patent Literature

Patent Literature 1: Japanese Patent No. 5224489

### Summary of Invention

### Technical Problem

Generally, there are demands for displaying on such a display body not only variable images or stereoscopic images but also characters and the like together with these images. However, in the display body according to the conventional technology, the lens sheet is provided over the entire surface. This makes it difficult to see characters and the like since a portion which does not include variable images or stereoscopic images contains unnecessary noise as the portion is viewed through the optical elements. In a method of pasting each of lens sheets only to portions where variable images or stereoscopic images are displayed, the display body itself becomes thick.

In view of the above-stated problems, an object of the present invention is to provide a thin display body which enables the optic effect by optical elements to be observed while enabling characters and the like, printed or provided in other ways on a portion other than the part where the optic effect can be observed, to be clearly seen, a method for forming a partially-provided optical element array, and a display body manufacturing system.

### Solution to Problem

A display body including a partially-provided optical element array in the present invention is a display body enabling an optic effect by optical elements to be observed, wherein an image for producing the optic effect through interaction with the optical element array is formed in a first partial region on a first surface of a main body, the optical element array is formed in a second partial region corresponding to the first partial region on a second surface opposite to the first surface, the optical element array has recess portions and projecting portions, and a non-formation surface of the second surface where the optical element array is not formed is positioned between a lowest part of the recess portions and a highest part of the projecting portions.

A display body including a partially-provided optical element array in the present invention is a display body enabling an optic effect by optical elements to be observed, wherein an image for producing the optic effect through interaction with the optical element array is formed in a first partial region on a first surface of a main body, the optical element array is formed by a method for forming a partially-provided optical element array, including: a molding step of pressing a shaping surface of a shaping member to a second partial region corresponding to the first partial region on the second surface opposite to the first surface to mold in the second partial region a reversal shape of a structure of the shaping surface; and a releasing step of releasing pressing by the shaping member to form the optical element array in the second partial region; and further a position adjustment step of performing position adjustment to press the shaping surface to the second partial region, the position adjustment step being performed before the molding step and after the image is confirmed or, when another image, other than the image for producing the optic effect, is formed on a region other than the first partial region, the position adjustment step being performed before the molding step and after at least one of the another image and the image is confirmed, the optical element array formed on the second partial region has recess portions and projecting portions, and a non-formation surface of the second surface where the optical element array is not formed is positioned between a lowest part of the recess portions and a highest part of the projecting portions.

The optical element may be formed by a method for forming a partially-provided optical element array, wherein in the position adjustment step, the image is confirmed, or when the another images is formed, at least one of the another image and the image is confirmed, then the position adjustment is performed to press one the shaping surface to the second partial region and to press the other the shaping surface to the first partial region, in the molding step, a shaping surface of one the shaping member is pressed to the second partial region to mold in the second partial region a reversal shape of a structure of the shaping surface of the one shaping member, and a shaping surface of the other the shaping member is pressed to the first partial region to mold in the first partial region a reversal shape of a structure of the shaping surface of the other shaping member, and in the releasing step, pressing by the one shaping member and the other shaping member is released to form the optical element array in the second partial region and to form a irregularity portion in the first partial region.

The optical element array may be a convex lens array, and a focal plane of the optical element array may substantially align with the first surface having the image formed thereon.

The main body may include: a first member including the first surface; a second member including the second surface, the second member being made of a transparent material; and a support member configured to support the first member and the second member.

The support member may support the first member and the second member in a mode that the first surface and the second surface face in opposite directions with a specified distance there between or in a mode that the first member surface faces the second member, and may support the first member and the second member with space interposed therein to prevent the first member and the second member from coming into contact with each other.

The image may be a contraction image array constituted by repeating a plurality of contraction images, the contraction images being each formed by reducing an array-direction size of the optical element array of a virtual image produced by the optic effect.

The image may produce a stereoscopic vision or a change image through interaction with a plurality of cylindrical lens arranged in parallel and may be a synthesized image formed by repeating a plurality of image units each made up of a plurality of strip-like images corresponding to each of the cylindrical lenses.

The image may be a synthesized image formed by synthesizing a plurality of images by an integral photography method.

A method for forming a partially-provided optical element array in the present invention is a method for forming a partially-provided optical element array enabling an optic effect to be partially observed, the partially-provided optical element array being formed on a display body including a main body unit, wherein an image for producing the optic effect through interaction with the optical element array is formed in a first partial region on a first surface of the main body unit, and another image, other than the image for producing the optic effect, is formed in a region other than the first partial region on the first surface, the method including: a molding step of pressing a shaping surface of a shaping member to a second partial region corresponding to the first partial region on a second surface opposite to the first surface to mold in the second partial region a reversal shape of a structure of the shaping surface; a releasing step of releasing pressing by the shaping member to form the optical element array in the second partial region; and further a position adjustment step of performing position adjustment to press the shaping surface to the second partial region, the position adjustment step being performed before the molding step and after the image is confirmed or, when another image, other than the image for producing the optic effect, is formed on a region other than the first partial region, the position adjustment step being performed before the molding step and after at least one of the another image and the image is confirmed.

A display body manufacturing system in the present invention is a display body manufacturing system for forming display bodies by forming optical element arrays on a plurality of main body units conveyed on a production line, wherein an image for producing an optic effect through interaction with each of the optical element arrays is formed in a first partial region on a first surface of each of the main bodies, the system including a plurality of processors for forming optical element arrays, each of the processors being configured to confirm the image, or when another image, other than the image for producing the optic effect, is formed on a region other than the first partial region, to confirm at least one of the another image and the image and perform position adjustment, then to press a shaping surface of a shaping member to the second partial region corresponding to the first partial region on a second surface opposite to the first surface to mold a reversal shape of a structure of the shaping surface in the second partial region, and to release pressing by the shaping member to form the optical element array in the second partial region, wherein the optical element array formed in the second partial region has recess portions and projecting portions, a non-formation surface of the second surface where the optical element array is not formed is positioned between a lowest part of the recess portions and a highest part of the protruding portions, and the plurality of processors sequentially perform optical element array forming processing on the conveyed main body

The shaping members of the processors may each have shaping surfaces different from each other.

### Advantageous Effects of Invention

The display body including a partially-provided optical element array of the present invention can implement a thin display body which enables the optic effect by optical elements to be observed and enables characters and the like, printed or provided in other ways on a portion other than the part where the optic effect can be observed, to be clearly seen.

The display body including a partially-provided optical element array formed by the method for forming a partially-provided optical element array of the present invention can implement a thin display body which enables the optic effect by optical elements to be observed and enables characters and the like, printed or provided in other ways on a portion other than the part where the optic effect can be observed, to be clearly seen.

The method for forming a partially-provided optical element array of the present invention can form a thin display body which enables the optic effect by optical elements to be observed and enables characters and the like, printed or provided in other ways on a portion other than the part where the optic effect can be observed, to be clearly seen.

The display body manufacturing system of the present invention can form thin display bodies which enable the optic effect by optical elements to be observed and enable characters and the like, printed or provided in other ways on a portion other than the part where the optic effect can be observed, to be clearly seen.

### Brief Description of Drawings

[Figure 1] Figure 1 is a plan view of a display body of the present invention.
[Figure 2] Figure 2 is an explanatory view of an optic effect.
[Figure 3] Figure 3 is an explanatory view of an optic effect display region.
[Figure 4] Figure 4 is a cross sectional view of Figure 1 taken along A-A' line.
[Figure 5] Figure 5 is an explanatory view of a system S1.
[Figure 6] Figure 6 is an explanatory view of the system S1.
[Figure 7] Figure 7 is an explanatory view of the system S1.
[Figure 8] Figure 8 is an explanatory view of the system S1.
[Figure 9] Figure 9 is an explanatory view of the system S1.
[Figure 10] Figure 10 is an explanatory view of the system S1.
[Figure 11] Figure 11 is a flowchart illustrating processing to form a partially-provided optical element array.
[Figure 12A] Figure 12A is an explanatory view of a system S2.
[Figure 12B] Figure 12B is a schematic plan view of Figure 12A as viewed in a white arrow direction.
[Figure 13] Figure 13 is an explanatory view of the system S2.
[Figure 14] Figure 14 is an explanatory view of the system S2.
[Figure 15] Figure 15 is an explanatory view of the system S2.
[Figure 16A] Figure 16A is an enlarged view of a main part of a pressurization unit serving as a shaping member used in the system S1.
[Figure 16B] Figure 16B is an enlarged view of a main part of a stamp unit serving as a shaping member used in the system S2 and the vicinity thereof.
[Figures 17] Figure 17(A) is an enlarged view of a main part of the pressurization unit having a shaping surface with a shallower recess structure,
Figure 17(B) is an enlarged view of a main part of the pressurization unit having a shaping surface with a deeper recess structure, Figure 17(C) is an enlarged view of a main part of the pressurization unit having a shaping surface with a reversal shape of a planoconvex lens array formed thereon,
Figure 17(D) is an enlarged view of a main part of the pressurization unit having a shaping surface with a reversal shape of a Fresnel lens array formed thereon, Figure 17(E) is an enlarged view of a main part of the pressurization unit having a shaping surface with a reversal shape of a prism element array formed thereon.
[Figures 18] Figures 18(C1) and 18(C2) illustrate examples of a planoconvex lens array, Figures 18(D1) and 18(D2) illustrate examples of a Fresnel lens array, and Figure 18(D3) illustrates an example of a linear Fresnel lens array.
[Figure 19A] Figure 19A is a plan view of a display body 1A.
[Figure 19B] Figure 19B is a side view of the display body 1A.
[Figure 20A] Figure 20A is a plan view of the display body 1B.
[Figure 20B] Figure 20B is a side view of the display body 1B.
[Figure 21] Figure 21 is a plan view of a display body 1C.
[Figure 22] Figure 22 is a perspective view of a display body 1D.
[Figure 23A] Figure 23A is a cross sectional view of a main body unit 10E.
[Figure 23B] Figure 23B is a cross sectional view of the display body 1E.
[Figure 24] Figure 24 is a cross sectional view of the display body 1F.
[Figure 25A] Figure 25A is a developed explanatory view of a display body 1G.
[Figure 25B] Figure 25B is a side view of the display body 1G.
[Figure 26A] Figure 26A is an explanatory view of a system S3.
[Figure 26B] Figure 26B is a cross sectional view of a display body 1H.
[Figure 26C] Figure 26C is a cross sectional view of a display body 1K.
[Figure 27] Figure 27 is an expanded sectional view of a main part of an optical element array.
[Figure 28A] Figure 28A is an expanded view of a photographed image of a main part of the optical element array.
[Figure 28B] Figure 28B is a measurement graph of the height of the optical element array.
[Figure 29] Figure 29 is an example of a display body.
[Figure 30] Figure 30 is an external structure view of an optical element array formation system LS 1.
[Figure 31A] Figure 31A is an expanded sectional view of a main part of the optical element array after first processing.
[Figure 31B] Figure 31B is an expanded sectional view of a main part of the optical element array after second processing.
[Figure 32] Figure 32 is a cross sectional view illustrating one example of the display body of the present invention.

### Description of Embodiments

Embodiments of the present invention will be described with reference to the drawings. However, the embodiments described hereinafter are merely illustrative and are not intended to exclude various modifications and application of technologies which are not expressed hereinafter. That is, various modifications (such as combining each embodiment) of the present invention can be implemented as long as the effects of the invention are demonstrated. In the following description of the drawings, like or similar component members are designated by like or similar reference numerals. The drawings are exemplary and are not necessarily representative of actual sizes, ratios, and the like. The drawings may include portions different in size and ratio from each other.

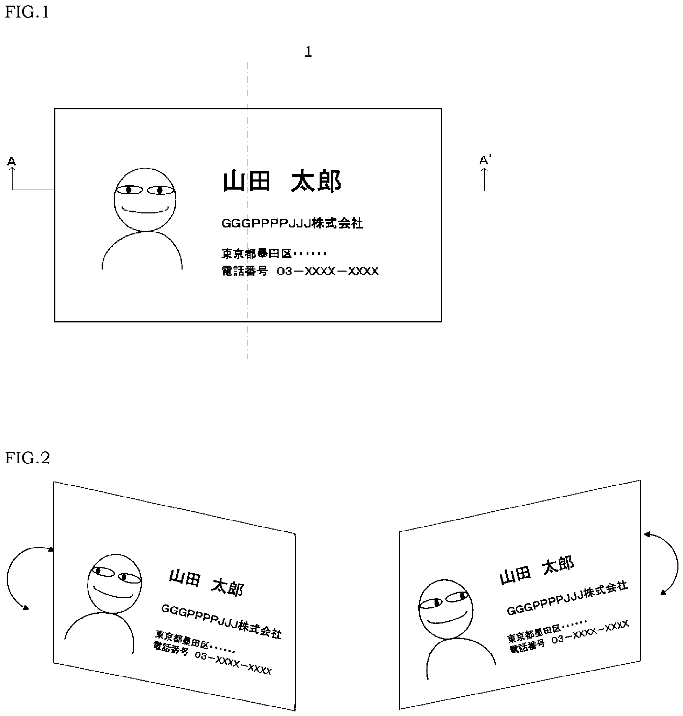

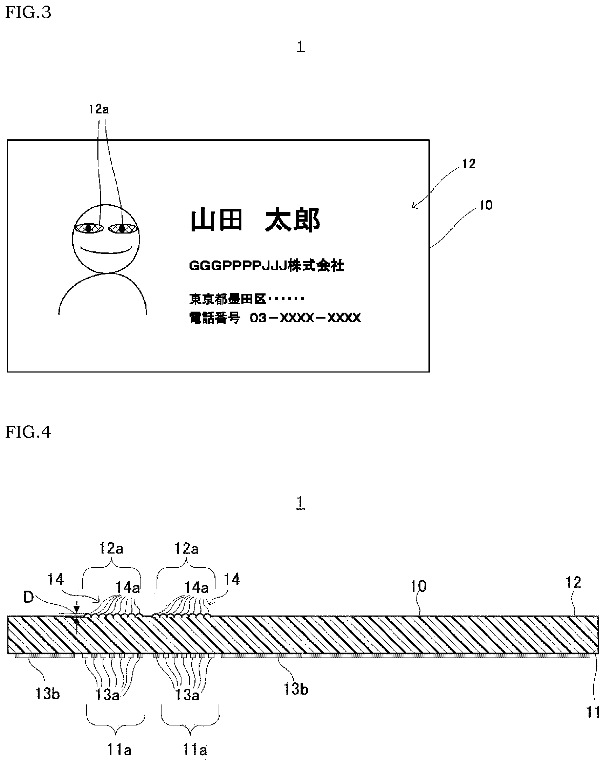

Figure 1 is a plan view of a display body of the present invention, Figure 2 is an explanatory view of an optic effect, Figure 3 is an explanatory view of an optic effect display region, and Figure 4 is a cross sectional view of Figure 1 taken along A-A' line.

The display body 1 according to the present embodiment is a display body enabling an optic effect by optical elements to be observed. An image 13a for producing the optic effect through interaction with an array 14 of optical elements 14a, such as lenses and prisms, is formed in a first partial region 11 a on a first surface 11 of a main body unit 10. The optical element array is formed by a method for forming a partially-provided optical element array including as essential steps: a molding step of pressing a shaping surface 30a (or a shaping surface 60a) of a pressurization unit 30 (or a stamp unit 60) serving as a later-described shaping member to a second partial region 12a corresponding to the first partial region 11a on a second surface 12 opposite to the first surface 11 to mold in the second partial region 12a a reversal shape of a structure of the shaping surface 30a (or the shaping surface 60a); a releasing step of releasing pressing by the pressurization unit 30 (or the stamp unit 60) to form the optical element array 14 in the second partial region 12a; and further a position adjustment step of performing position adjustment to press the shaping surface 30a (or the shaping surface 60a) to the second partial region 12a, the position adjustment step being performed before the molding step and after the image 13a is confirmed or, when another image, other than the image 13a formed for producing the optic effect, is formed on a region other than the first partial region 11a, the position adjustment step being performed before the molding step and after at least one of the another image and the image 13a is confirmed. In the drawings, the number of the optical elements 14a and the images 13a are cut down for easy understanding of the configuration.

First, an example of constituting the main body unit 10 by one member made of a transparent material is described.

The display body 1 includes an optical element array 14 provided in part thereof so that the optic effect produced by this optical element can be observed only in part thereof. In the illustrated example, changing the observation angle of the display body 1 around a dashed dotted line of Figure 1 , only part of the display body 1 (only eye portion in the illustrated example) looks like moving, as illustrated in Figure 2 . The display body 1 is constituted of the main body unit 10 formed with a transparent material. Thus, the optical element array 14 is formed only in an optic effect display region in which the optic effect by the optical elements is desired to be produced. In the following descriptions, an image produced by the optical element array 14 and the image 13a as one example of the optic effect is called "a virtual image".

The main body unit 10 may be made of any materials as long as they are conventionally used as materials of optical elements. For example, transparent resin materials may be used, such as polyethylene terephthalate (PET), PP, polyethylene terephthalate glycol-modified (PETG), acrylics, and acrylate resins. In the present embodiment, the main body unit 10 may be transparent to the degree that an observer can observe a virtual image from the second surface 12 side, the virtual image being produced by the image 13a formed on the first surface 11.

The images 13a and 13b, such as designs, characters, and patterns, are formed on the first surface 11 of the main body unit 10 by printing, transfer, engraving, etching, and the like. In the first partial region 11a, the image 13a for producing the optic effect through interaction with the optical element array 14 is formed. In a portion other than the first partial region 11a, the image 13b which does not produce an optic effect, such as characters, may be formed for example. An image, such as a register mark for position adjustment, a design, and a character, may be formed as another image of the present invention.

Figure 4 illustrates an example in which the first surface 11 of the main body unit 10 includes two first partial regions 11a. Specifically, the images 13a for producing a virtual image of the eyes illustrated in Figures 1 to 3 are formed in the first partial regions 11a.

The image 13a is similar in configuration to publicly known conventional images for producing the optic effect through interaction with the optical element array 14. For example, the image 13a may be a contraction image array constituted by repeating a plurality of contraction images 13a, the contraction images 13a being each formed by reducing an array-direction size of the optical element array of a virtual image produced by the optic effect through interaction with the optical element array. The image 13a may be a synthesized image formed by synthesizing a plurality of images by an integral photography method. Furthermore, the image 13a may be a synthesized image formed by producing a stereoscopic vision or a change image through interaction with a plurality of cylindrical lens serving as optical elements arranged in parallel and repeating a plurality of image units each made up of a plurality of strip-like images corresponding to each of the cylindrical lenses.

The optical element array 14 constituted of a plurality of optical elements 14a is formed in a second partial region 12a corresponding to the first partial region 11a on a second surface 12 opposite to the first surface 11 of the main body unit 10. The optical elements 14a are, for example, cylindrical lenses, planoconvex lenses, Fresnel lenses, prism elements, and the like. In the present embodiment, the cylindrical lenses are illustrated as one example of the optical elements 14a.

When the optical element array 14 is a convex lens array, such as a cylindrical lens array (lenticular) and a planoconvex lens array, the focal plane of the optical element array 14 is preferably configured to substantially align with the first surface 11 having the image 13a formed thereon. In other words, it is preferable to constitute so that each of the optical elements 14a focuses on the image 13a.

Thus, the display body 1 has the optical element array 14 formed thereon so as to produce the optic effect by the optical elements only in a desired part. Therefore, in regions other than the optic effect display region, the image 13b can clearly be seen. There is also an advantage that the optical element array 14 is formed integrally with the main body unit 10. This makes it possible to reduce the thickness of the display body 1 itself.

A description is now given of the method for forming a partially-provided optical element array.

### (Case of using pressurization unit including shaping surface as shaping member)

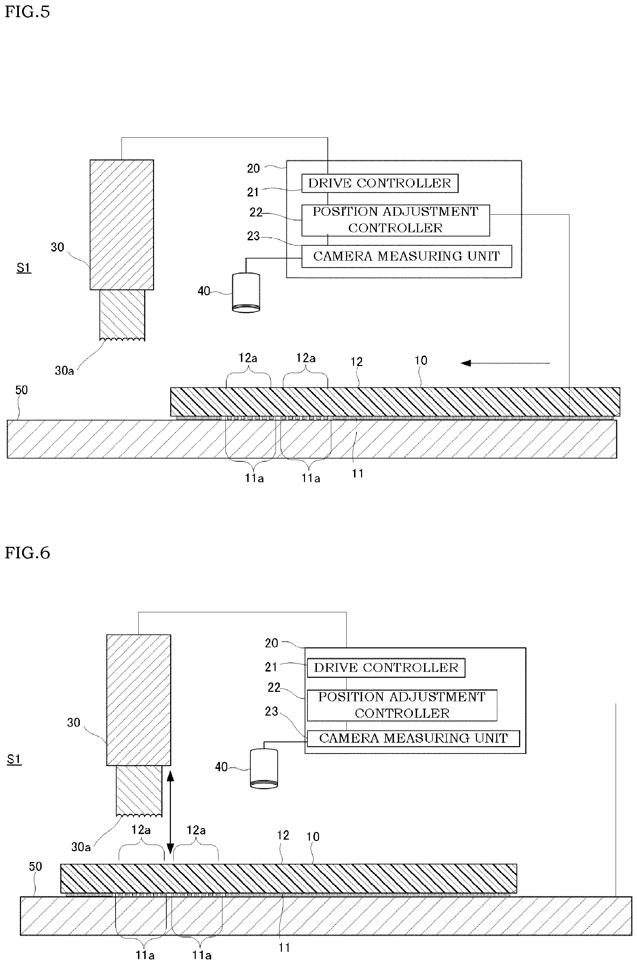

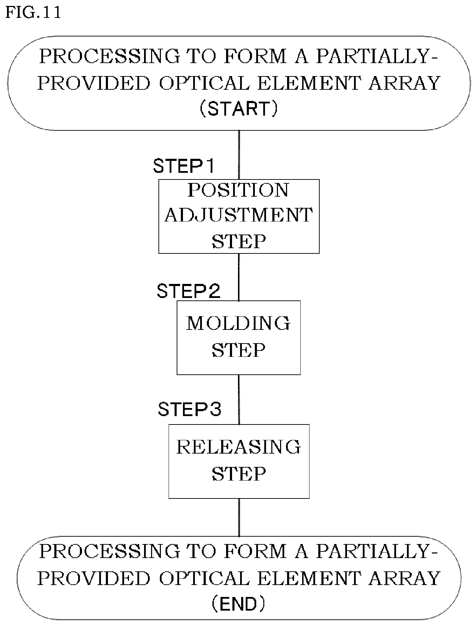

Figures 5 to 10 are explanatory views of a system S1 for forming display bodies, and Figure 11 is a flowchart illustrating processing to form a partially-provided optical element array.

The system S1 for forming the display bodies 1 is constituted of a pressurization unit 30 as a shaping member, a position measurement camera 40, a position adjustment table 50, and a control device 20 including a computer and the like that performs control of these members, and the like.

The pressurization unit 30 is configured to apply heat to melt or soften the main body unit 10 so that irregularities are formed on the main body unit 10. The pressurization unit 30 includes a shaping surface 30a. The shaping surface 30a has a shape inverted from the shape of a desired optical element array 14.

The position adjustment table 50 is configured to mount and convey the main body unit 10 and to execute position adjustment. The main body unit 10 is mounted with the second surface 12 being positioned on the pressurization unit 30 side and the first surface 11 being positioned on the position adjustment table 50 side. The main body unit 10 is conveyed from a right side to a left side in the drawing.

An photographed image of the main body unit 10 photographed by the position measurement camera 40 is captured into a camera measuring unit 23 of the control device 20. While the photographed image is analyzed to measure the position of the main body unit 10, the main body unit 10 mounted on the position adjustment table 50 is conveyed so that the first partial region 11a of the main body unit 10 is positioned below the pressurization unit 30 (Figure 6). Since the main body unit 10 is formed with a transparent material, an image of the first partial region 11a can be photographed by the position measurement camera 40 placed on the second surface 12 side and be used for confirmation. In this case, position adjustment of the main body unit 10 is executed by a position adjustment controller 22 of the control device 20. The position adjustment processing is executed by using a publicly known conventional position adjustment software by the position adjustment controller 22.

Specifically, precise position adjustment of the main body unit 10 is performed by moving the position adjustment table 50 in xy directions and a rotation direction (a direction of θ) so that the image 13a formed in the first partial region 11a is positioned below the shaping surface 30a (Figure 11 (STEP1: position adjustment step)). The position adjustment is equivalent to the position adjustment of the optical element array 14 to be formed. This position adjustment is important for implementing, with a high degree of accuracy, an optic effect produced based on relative positional relationship between the optical element array 14 and the image 13a. Therefore, it is preferable to make positioning at a desired position with the precision of 10 µm or less.

In the present example position adjustment is performed by moving the position adjustment table 50 so that the main body unit 10 is positioned below the shaping surface 30a. However, the pressurization unit 30 may be moved in the xy directions and the rotation direction (the direction of θ) so that the shaping surface 30a is positioned above the first partial region 11a of the main body unit 10.

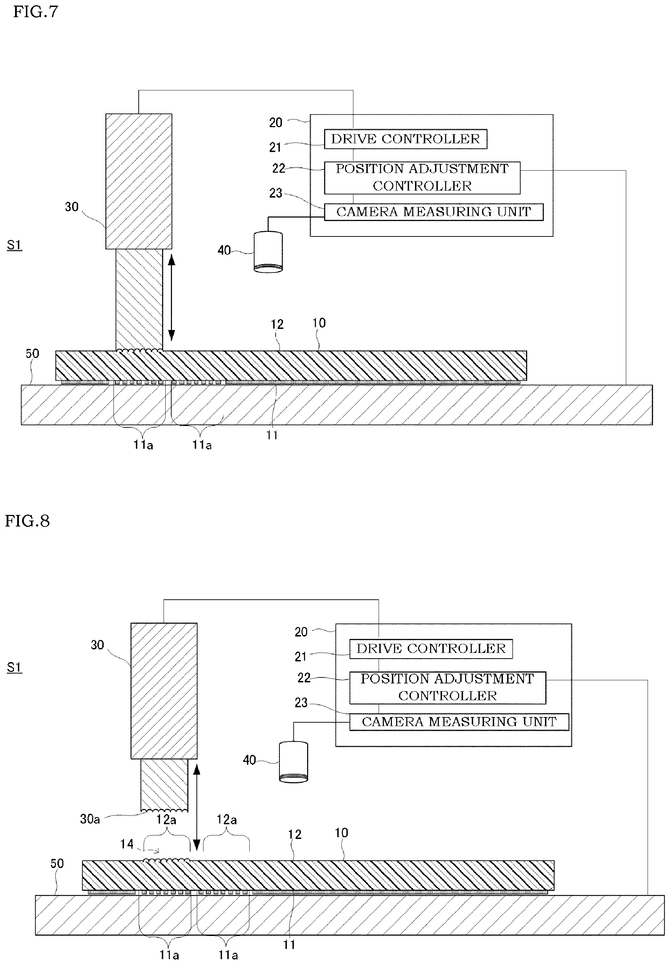

After the position adjustment of the main body unit 10 (Figure 6), the pressurization unit 30 is moved downward by a drive controller 21 of the control device 20, and the shaping surface 30a is pressed to the second partial region 12a on the second surface 12 corresponding to the first partial region 11a in the main body unit 10 (Figure 7). In the pressed state, heat is applied by the pressurization unit 30. As a result, a reversal shape of the structure of the shaping surface 30a is molded in the second partial region 12a (Figures 7 and 11 (STEP2: molding step)). Specifically, in the state where the shaping surface 30a is pressed to the second partial region 12a, heated portions melted or softened by application of heat are solidified and molded. Since the heated portions include only the shaping surface 30a, the vicinity thereof, and the second partial region 12a of the main body unit 10, heating time may be about 2 seconds or less for example. Since such partial heating is performed, the heated portions may be cooled and solidified in short time. Therefore, it becomes possible to enhance productivity, as well as to perform highly precise molding by swift solidification.

Next, the pressurization unit 30 is moved upward by the drive controller 21, and the state of the shaping surface 30a being pressed to the main body unit 10 is released (Figures 8 and 11 (STEP3: releasing step)). As a consequence, the optical element array 14 can be formed in the second partial region 12a of the main body unit 10.

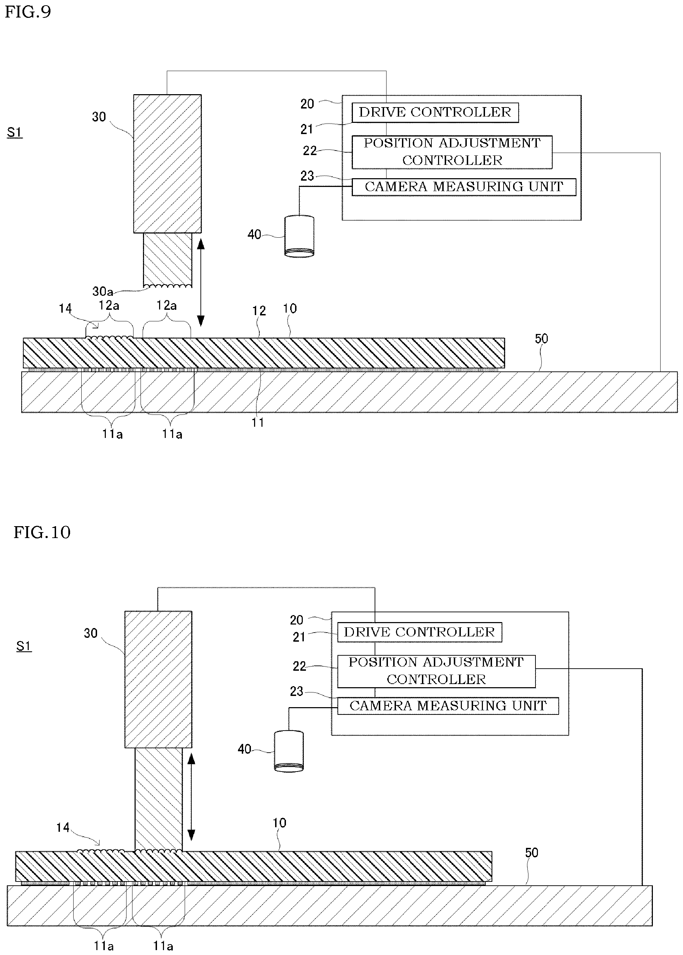

As in the present example, when there are a plurality of first partial regions 11a, the step described above is repeated.
After the state of pressing the shaping surface 30a to the main body unit 10 is released (Figure 8), the main body unit 10 is conveyed again (Figure 9). Then, as described in the foregoing, position adjustment by the control device 20, the position measurement camera 40, and the position adjustment table 50 is performed, and the image 13a formed in the first partial region 11a is positioned below the shaping surface 30a (Figure 11 (STEP1: position adjustment step)).

Then, the pressurization unit 30 is moved downward by the drive controller 21, and the shaping surface 30a is pressed to the second partial region 12a on the second surface 12 corresponding to the first partial region 11a in the main body unit 10 (Figure 10). In the pressed state, heat is applied by the pressurization unit 30. As a result, the reversal shape of the structure of the shaping surface 30a is molded in the second partial region 12a (Figures 10 and 11 (STEP2: molding step)). In the state where the shaping surface 30a is pressed to the second partial region 12a of the main body unit 10, the heated portions melted or softened by heat application are solidified and formed.

Next, the pressurization unit 30 is moved upward by the drive controller 21, and the state of the shaping surface 30a being pressed to the main body unit 10 is released (Figure 11 (STEP3: releasing step)). As a consequence, the optical element array 14 can be formed in the second partial region 12a of the main body unit 10.
The display body 1 including a partially-provided optical element array can be formed by the method for forming a partially-provided optical element array having the procedures described above.

(Case of including shaping member on position adjustment table side) In the system S1 described in the foregoing, the pressurization unit 30 is provided with the shaping surface 30a and is used as a shaping member. However, a stamp unit including a shaping surface may be fixedly provided on the side of the table for mounting the main body unit 10, and the stamp unit may be made to function as a shaping member.

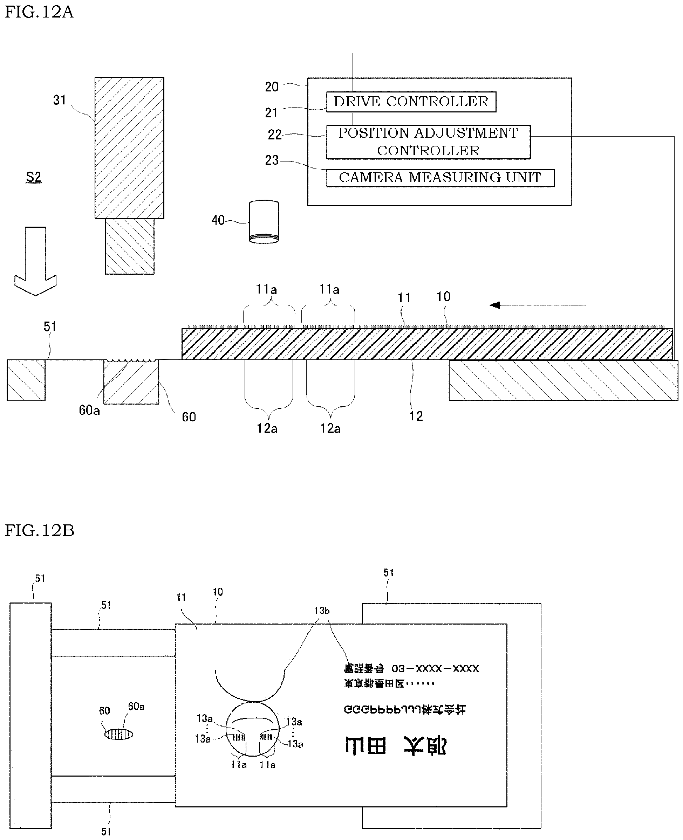

Figures 12A, 12B , and Figures 13 to 15 are explanatory views of a system S2 for forming display bodies. The formation processing step of the partially-provided optical element array is as illustrated in Figure 11 .

The system S2 is constituted of a position adjustment table 51, a pressurization unit 31, a position measurement camera 40, a stamp unit 60 as a shaping member including a shaping surface 60a, and a control device 20 including a computer and the like that performs control of these members, and the like. Figure 12B is a schematic plan view of Figure 12A as viewed in a white arrow direction. In the drawings, the position adjustment table 51, the stamp unit 60 and its shaping surface 60a, and the main body unit 10 are illustrated, and other component members are omitted.

A pressing surface of the pressurization unit 31 is flat. Except for the configuration of the shaping surface, the pressurization unit 31 has substantially the same functions as those of the aforementioned pressurization unit 30.

The position adjustment table 51 is configured to mount and convey the main body unit 10 and to execute position adjustment. The main body unit 10 is mounted with the first surface 11 being positioned on the pressurization unit 31 side and the second surfaces 12 being positioned on the position adjustment table 51 side. The main body unit 10 is conveyed from a right side to a left side in the drawing.

The stamp unit 60 including the shaping surface 60a is provided on the position adjustment table 51 side. The stamp unit 60 is positioned below the pressurization unit 31, with the shaping surface 60a being positioned so as to face the pressing surface of the pressurization unit 31. The shaping surface 60a has a shape inverted from the shape of a desired optical element array 14. The other configuration elements and functions of the position adjustment table 51 are similar to those of the position adjustment table 50 in the system S1 described before. The configuration and function of the position measurement camera 40 and the control device 20 are similar to those in the system S1 described before. The method for controlling position adjustment is also similar to that in the system S1 described before.

The position adjustment of the main body unit 10 is executed by the control device 20, the position measurement camera 40, and the position adjustment table 51 so that the image 13a formed in the first partial region 11a is positioned below the pressurization unit 31 and above the shaping surface 60a of the engraving unit 60 ( Figure 11 (STEP1: position adjustment step)).

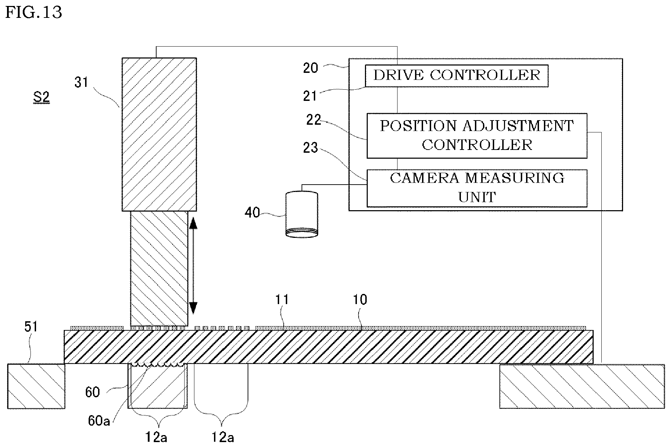

Then, the pressurization unit 31 is moved downward by the drive controller 21 of the control device 20, and the pressurization unit 31 is pressed against the first partial region of the main body unit 10 so that the shaping surface 60a is pressed to the second partial region 12a corresponding to the first partial region 11a in the main body unit 10 (Figure 13). In the pressed state, heat is applied by the pressurization unit 31. As a result, the reversal shape of the structure of the shaping surface 60a is molded in the second partial region 12a (Figures 13 and 11 (STEP2: molding step)).

Specifically, in the state where the shaping surface 60a is pressed to the second partial region 12a of the main body unit 10, heated portions of the main body unit 10 melted or softened by applied heat are solidified and formed. Since the heated portions are limited to the shaping surface 60a and its vicinity, and the first and second partial regions 11a and 12a of the main body unit 10 and their vicinities, typically, heating time may be about 2 seconds or less.

Heat is applied from the first surface 11 side of the main body unit 10. Although the heating time is dependent on the thickness of the main body unit 10, molding can be performed in short heating time (for example, about 2 seconds or less) if the thickness of the main body unit 10 is about several millimeters. Since such partial heat application is performed, the heated portions may be cooled and solidified in short time. Therefore, it becomes possible to enhance productivity, as well as to perform highly precise molding by swift solidification.

Next, the pressurization unit 31 is moved upward by the drive controller 21, and the state of the shaping surface 60a being pressed to the main body unit is released (Figure 11 (STEP3: releasing step)). As a consequence, the optical element array 14 can be formed in the second partial region 12a of the main body unit 10.

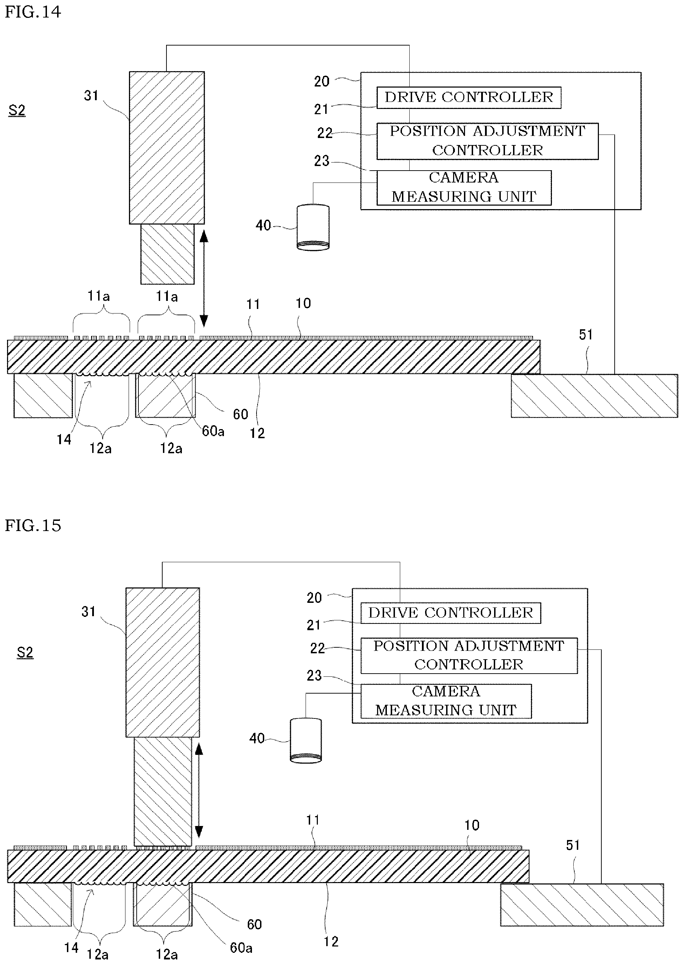

As in the present example, when there are a plurality of first partial regions 11a, the step described above is repeated. After the pressing state is released, the main body unit 10 is conveyed again (Figure 14). Then, as described before, position adjustment by the control device 20, the position measurement camera 40, and the position adjustment table 51 are performed. The image 13a formed in the first partial region 11a is positioned below the pressurization unit 31 and above the shaping surface 60a of the stamp unit 60 (Figure 11 (STEP1: position adjustment step)). The pressurization unit 31 is moved downward by the drive controller 21, and the pressurization unit 31 is pressed against the first partial region of the main body unit 10, so that the shaping surface 60a is pressed to the second partial region 12a of the second surface 12 corresponding to the first partial region 11a in the main body unit 10 (Figure 15). In the pressed state, heat is applied by the pressurization unit 31. As a result, the reversal shape of the structure of the shaping surface 60a is molded in the second partial region 12a (Figures 15 and 11 (STEP2: molding step)).

In the state where the shaping surface 60a is pressed to the second partial region 12a of the main body unit 10, the heated portions melted or softened by applied heat are solidified and molded. Next, the pressurization unit 31 is moved upward by the drive controller 21, and the state of the shaping surface 60a being pressed to the main body unit 10 is released (Figure 11 (STEP3: releasing step)). As a consequence, the optical element array 14 can be formed in the second partial region 12a of the main body unit 10. The display body 1 including a partially-provided optical element array can be formed by the method for forming a partially-provided optical element array having the procedures described above.

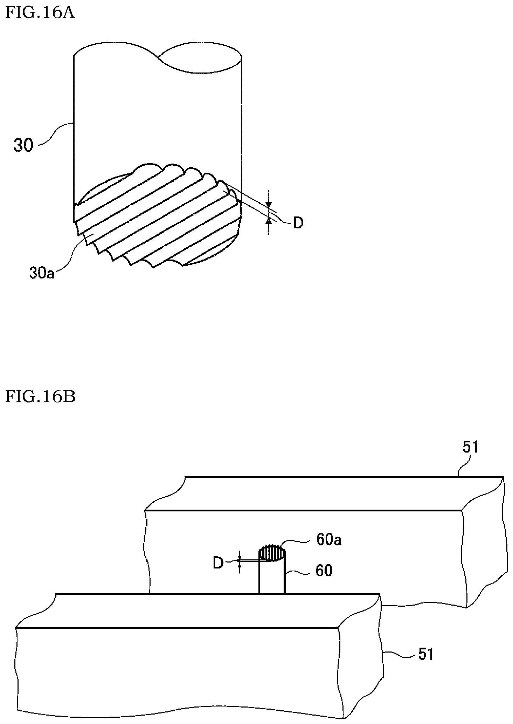

Figures 16A and 16B are enlarged perspective views of a main part of the shaping member. Figure 16A is an enlarged perspective view of a main part of the pressurization unit 30 serving as a shaping member used in the system S1. Figure 16B is an enlarged perspective view of a main part of the stamp unit 60, which serves as a shaping member used in the system S2, and the vicinity thereof.
In the examples of Figures 16A and 16B , a reversal shape of irregularities of cylindrical lenses is molded on the shaping surfaces 30a and 60a as one example of the optical element 14a. As a consequence, in the systems S1 and S2, a cylindrical lens array as the optical element array 14 is formed in the second partial region of the main body unit 10, by which the display body 1 is formed.

The optical member region, i.e., the second partial region, may be formed into various shapes by properly changing the shape of the shaping surface 30a of the pressurization unit 30 or the shaping surface 60a of the stamp unit 60. Various shapes, such as circle and triangle, can be taken. When the shaping surfaces 30a and 60a are formed into an oval shape as illustrated in Figures 16A and 16B , their shapes can be matched with the oval shape of human eyes as illustrated in Figure 1 and other drawings.

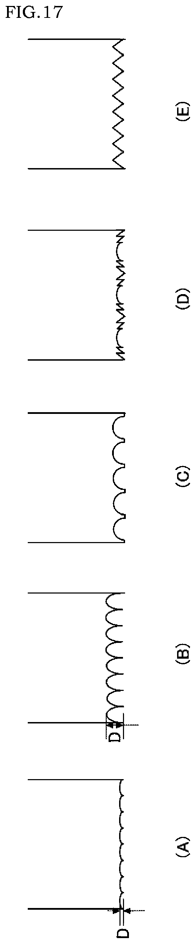

A depth D of recess portions of the shaping surfaces 30a and 60a is equivalent to a height D (Figure 4) of projecting portions of the cylindrical lenses 14a which constitute a reversal shape of the shaping surfaces 30a and 60a. Figure 17(A) is an enlarged view of a main part of the pressurization unit 30 having a shaping surface 30a with a shallower recess structure, and Figure 17(B) is an enlarged view of a main part of the pressurization unit 30 having a shaping surface 30a with a deeper recess structure.

When the optical element array 14 is a convex lens array as in the case of observing a virtual image by the optical element 14a and the image 13a, the focal plane of the optical element array 14 is preferably configured to substantially align with the first surface 11. Specifically, it is preferable to set the depth D of the recess portions of the shaping surfaces 30a and 60a so that the optical element 14a focuses on the image 13a.

Although the pressurization unit 30 is used as the shaping member in the illustrated example, the stamp unit 60 may be used in a similar way.

The optical elements which can be formed in the second partial region 12a of the main body unit 10 are not limited to cylindrical lenses. Various optical element arrays 14 can be formed in the main body unit 10 if the reversal shapes of irregular shapes, which are desired to be formed in the second partial region 12a, are formed on the shaping surfaces 30a and 60a.

Figure 17(C) is an enlarged view of a main part of the pressurization unit 30 having a shaping surface 30a with a reversal shape of a planoconvex lens array formed thereon, Figure 17(D) is an enlarged view of a main part of the pressurization unit 30 having a shaping surface 30a with a reversal shape of a Fresnel lens array formed thereon, and Figure 17(E) is an enlarged view of a main part of the pressurization unit 30 having a shaping surface 30a with a reversal shape of a prism element array formed thereon.

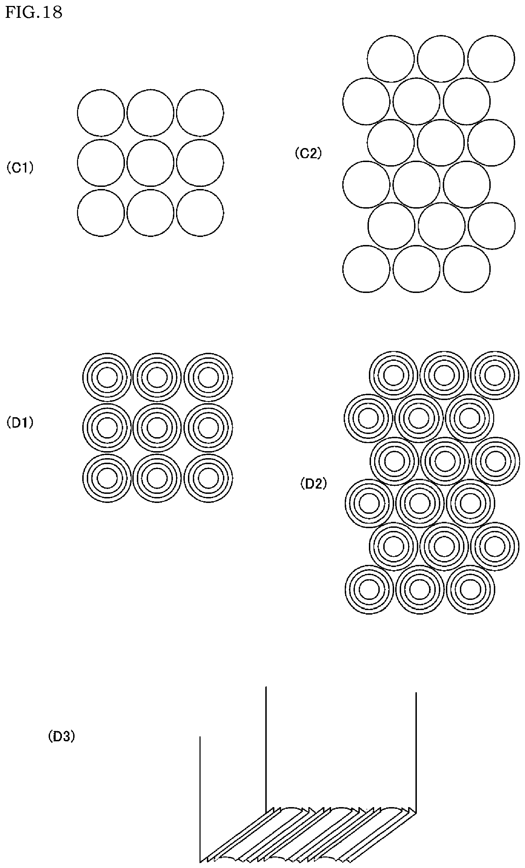

The planoconvex lens array of Figure 17(C) includes, for example, a square array (Figure 18 (C1)) and a honeycomb array (Figure 18 (C2)). The Fresnel lens array of Figure 17(D) includes, for example, a square array (Figure 18(D1)) and a honeycomb array (Figure 18(D2)). Furthermore, the Fresnel lens array of Figure 17(D) may include an array of linear Fresnel lenses made by forming circular arc portions of the cylindrical lenses into a Fresnel shape (Figure 18(D3)). In such linear Fresnel lenses, a plurality of grooves of individual linear Fresnel lenses are linearly formed in parallel with each other, so that light is advantageously collected on a straight line.

Although the pressurization unit 30 is used as the shaping member in the examples illustrated in Figures 17 and 18 , the stamp unit 60 may also be used in a similar way. More specifically, desired irregularities can be formed on the shaping surface 60a of the stamp unit 60, such as the reversal shape of a planoconvex lens array (such as a square array (Figure 18(C1)) and a honeycomb array (Figure 18(C2))), the reversal shape of a Fresnel lens array (such as a square array (Figure 18(D1)) and a honeycomb array (Figure 18(D2)), a linear Fresnel lens array ( Figure 18(D3))) and the reversal shapes of a prism element array.

Hereinafter, one example of various display bodies is described with reference to the drawings. For easier understanding, virtual images and the images 13b displayed on the display bodies may be omitted in the drawings.

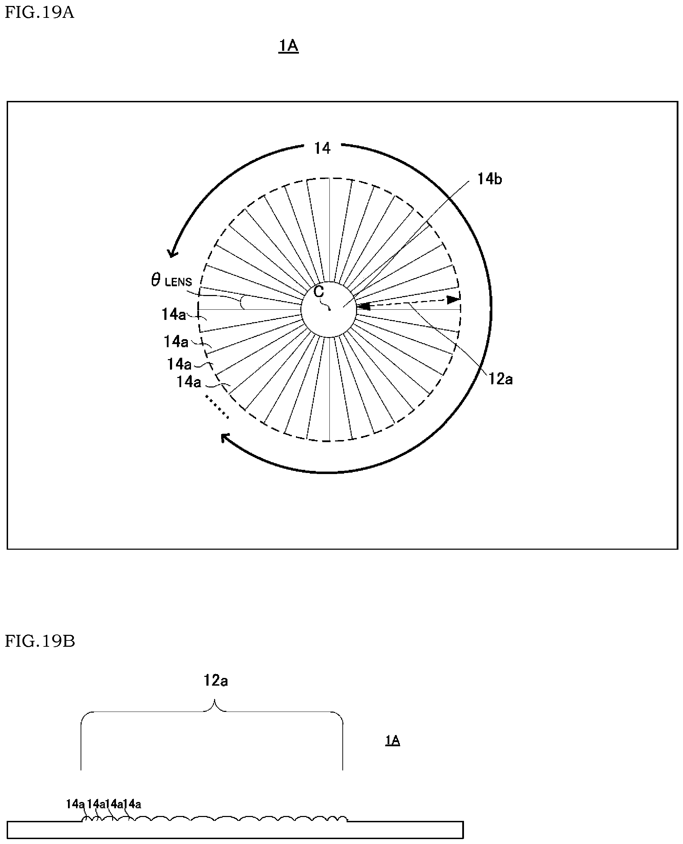

Figure 19A is a plan view of a display body 1A, and Figure 19B is a side view of the display body 1A. In Figure 19A , an optical element array 14 is formed in the second partial region 12a of the display body 1A illustrated by a broken line. The optical element array 14 in Figures 19A and 19B is constituted of optical elements 14a formed by a plurality of convex lens, the optical elements 14a being radially arranged in a circle around a point C at pitch angles of θLENS. A non-formation portion 14b having no optical element formed thereon is provided in the center of the optical elements 14a arranged in a circle.

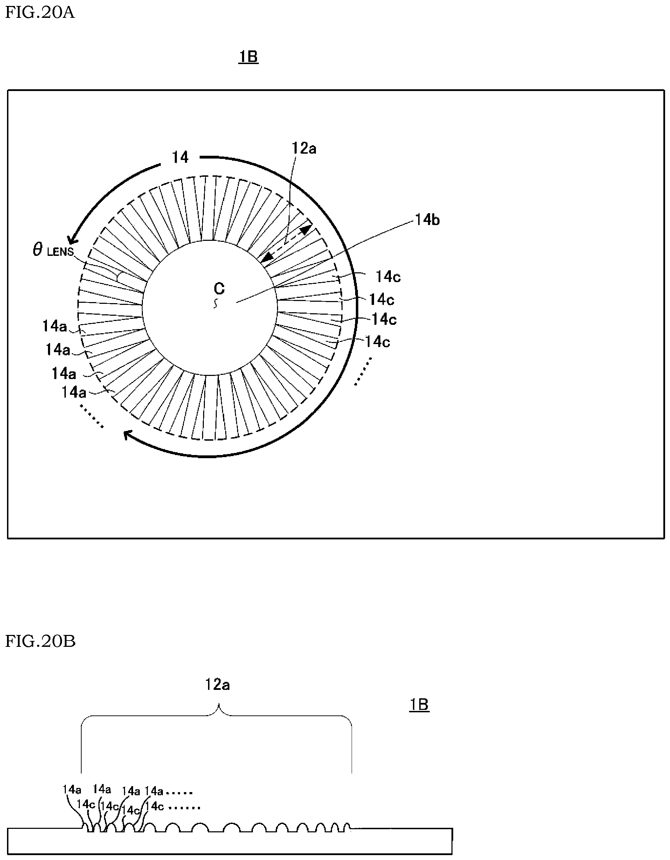

Figure 20A is a plan view of a display body 1B, and Figure 20B is a side view of the display body 1B. In Figure 20A , an optical element array 14 is formed in the second partial region 12a of the display body 1B illustrated by a broken line. While the display body 1A is configured to have the optical elements 14a arranged all over the second partial region 12a, the display body 1B represents an example in which the optical elements 14a are radially arrayed in another mode.

The optical element array 14 in the display body 1B is constituted of optical elements 14a formed with a plurality of convex lens, the optical elements 14a being radially arranged around a point C at pitch angles of 6LENS. A non-formation portion 14b having no optical element formed thereon is provided in the center of the optical elements 14a which are arranged in a circle. A space 14c is interposed in between projecting portions of the convex lenses.

If the reversal shape of irregularities of the radial optical element array constituted of radially arranged optical elements is formed on the shaping surfaces 30a and 60a, the radial optical element array constituted of radially arranged optical elements, as in the display bodies 1A and 1B, can be formed into a desired size at a desired position relatively easily. The non-formation portions 14b of the display bodies 1A and 1B may be planarized, may be in such shapes as a protruding shape, a recess shape, a corrugated shape, and a slope shape, or may be a through hole.

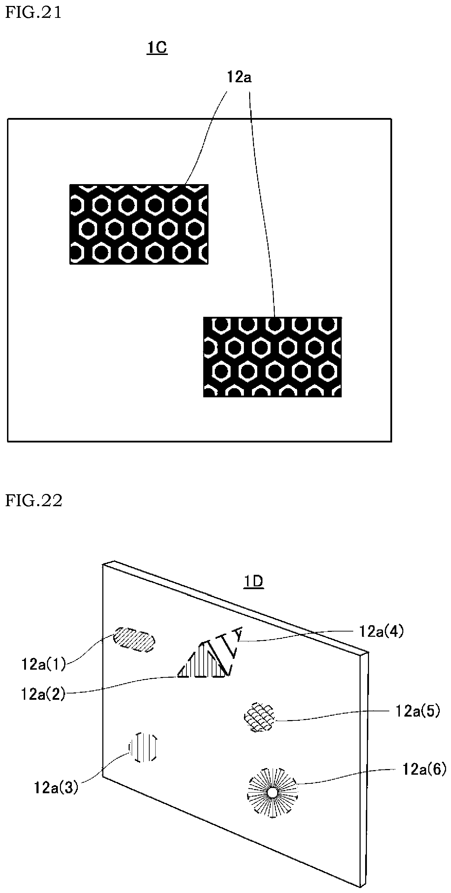

Figure 21 is a plan view of a display body 1C. The display body 1C has two second partial regions 12a. Convex lenses formed as optical elements in each of the second partial regions 12a are illustrated in black. A plurality of dot-like convex lenses and honeycomb-like convex lenses are arrayed. Optical element arrays of such configuration may also be formed.

Optical element arrays different in kind may be formed in the plurality of second partial regions 12a.

Figure 22 is a perspective view of a display body 1D. In Figure 22 , the second partial regions 12a(1) to 12a(6) of the display body 1D are illustrated by broken lines.

Cylindrical lens arrays are each formed in the second partial regions 12a(1) to 12a(4) of the display body 1D, a planoconvex lens array is formed in the second partial region 12a(5), and a radial array of convex lenses is formed in the second partial region 12a(6). The cylindrical lens array formed in the second partial region 12a(1) is different in direction from the cylindrical lens arrays formed in the second partial regions 12a(2) to 12a(4). The cylindrical lens array formed in the second partial region 12a(4) is different in direction from the cylindrical lens arrays formed in the second partial regions 12a(1) to 12a(3).

Thus, the optical element arrays different in kind (different in lens kind, lens array direction, and lens pitch) may be formed in the plurality of the second partial regions 12a integrally with the main body unit 10.

In the past, to use two or more kinds of lenses for a display body, it was necessary to prepare each of the lens sheets, cut the lens sheets into a desired size, and position the lens sheets on the images before laminating the lens sheets. According to the present invention, it becomes possible to arrange two or more kinds of lenses on images relatively easily simply by preparing the shaping members having the shaping surfaces 30a and 60a on which reversal shapes of irregularities of desired kind of lenses are formed.

According to the display body described in the foregoing, it becomes possible to implement a display body which enables the optic effect by optical elements to be observed and enables characters and the like, printed or provided in other ways on a portion other than the part where the optic effect can be observed, to be clearly seen. Since the optical element array 14 can be formed integrally with the main body unit 10, the display body itself can be made thin.

The optical element arrays described before are merely exemplary and are not restrictive. Any reversal shape of the optical element arrays having irregularities may be formed on the shaping surfaces 30a and 60a regardless of their shapes. Optical element arrays of desired shapes may be formed in the second partial regions 12a of the display body. Efficient formation of the optical element arrays can be implemented by preparing a plurality of pressurization units 30 and stamp units 60, whose shaping surfaces have different irregular shapes to enable the units to be detached from the systems S1 and S2 and be replaced.

In the display body described before, the main body unit 10 is used as one member, and the images 13a and 13b are formed on one surface (the first surface 11) of the main body unit 10, and the optical element array 14 is formed on the other surface (the second surface 12).

The display body of the present invention is not limited to such configuration. For example, the main body may be constituted of a first member including a first surface 11, a second member including a second surface 12, and a support member configured to support the first member and the second member

The first member and the second member may be made of any materials as long as they are conventionally used as materials of optical elements. For example, transparent resin materials may be used, such as polyethylene terephthalate (PET), PP, polyethylene terephthalate glycol-modified (PETG), acrylics, and acrylate resins. The first member and the second member may be transparent to the degree that an observer can observe a virtual image from the second surface 12 side, the virtual image being produced by the image 13a formed on the first surface 11.

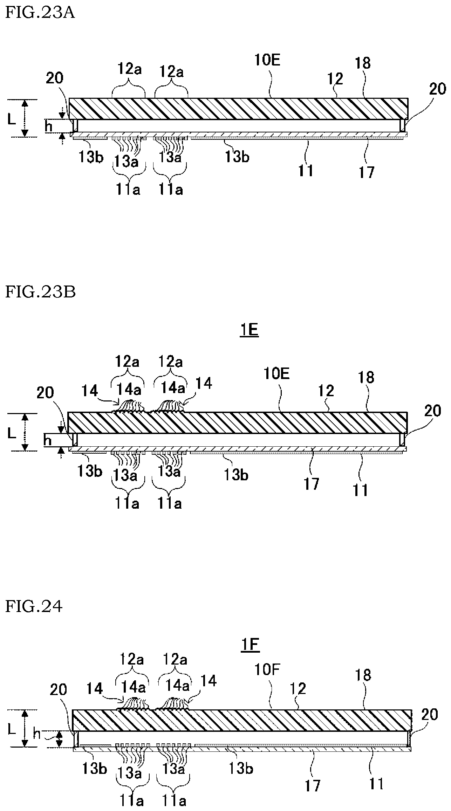

Figure 23A is a cross sectional view of a main body unit 10E. Figure 23B is a cross sectional view of the display body 1E constituted by a main body unit 10E.

The main body unit 10E has a first member 17 including a first surface 11, and a second member 18 including a second surface 12, the first member 17 and the second member 18 being arranged with a space h interposed therebetween. With a support member 20 provided at both ends of the main body unit 10E, the first member 17 and the second member 18 are supported in a mode that the first surface 11 and the second surface 12 face in opposite directions with a specified distance L therebetween.

The display body 1E including a partially-provided optical element array illustrated in Figure 23B is formed by the method for forming a partially-provided optical element array performed by the system S1 or system S2 described before.

In the display body 1E, the first member 17 and the second member 18 are supported in the mode that the first surface 11 and second surface 12 face in opposite directions. However, the first member 17 may be supported in such a mode that the first surface 11 faces inside.

Figure 24 is a cross sectional view of a display body 1F constituted by a main body unit 10F. The main body unit 10F has a first member 17 including a first surface 11, and a second member 18 including a second surface 12, the first member 17 and the second member 18 being arranged with a space h interposed therebetween. With a support member 20 provided at both ends of the main body unit 10F, the first member 17 and the second member 18 are supported with the first surface 11 and the second surface 12 with a specified distance L therebetween. In this case, the first member 17 and the second member 18 are supported while the first surface 11 of the first member 17 faces inside. The second member 18 may be made of any materials as long as they are conventionally used as materials of optical elements. For example, transparent resin materials may be used, such as polyethylene terephthalate (PET), PP, polyethylene terephthalate glycol-modified (PETG), acrylics, and acrylate resins. In the present embodiment, the second member 18 may be transparent to the degree that an observer can observe a virtual image from the second surface 12 side, the virtual image being produced by the image 13a formed on the first surface 11. The first member 17 may be an opaque sheet, a wooden board, a film, metal, and the like.

When the optical elements 14a formed on the second member 18 in the display body 1E and the display body 1F are convex lenses, the lenses are preferably configured to focus on the image 13a. Specifically, a depth D of the recess portions of the shaping surfaces 30a and 60a, a distance L between the first surface 11 and the second surface 12, and a space h between the first member 17 and the second member 18 are set so that the focus of the optical element 14a is on the image 13a. In Figures 23A, 23B, and 24 , the first member 17 and the second member 18 are arranged with the space h interposed therebetween so that they are not in contact with each other. However, the first member 17 and the second member 18 may be in contact with each other by setting the space h to 0 (zero).

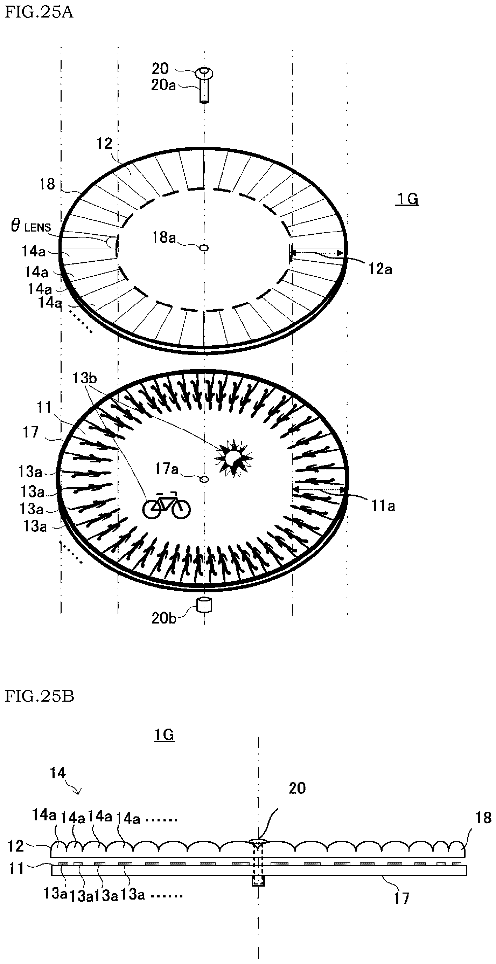

The first member 17 and the second member 18 may be configured to be relatively movable. Figure 25A is a developed explanatory view of a display body 1G, and Figure 25B is a side view of the display body 1G.

A second member 18 and a first member 17 are supported by a support member 20 so that they are independently rotatable around their respective centers 17a and 18a. The support member 20 is constituted of a shaft 20a and a fastener 20b. In this case, the second member 18 and the first member 17 may face each other with a specified distance therebetween and be supported with a space therebetween so as to prevent the second member 18 and the first member 17 from coming into contact with each other. The second member 18 and the first member 17 may be in contact with each other as long as they are rotationally slidable. The second member 18 and the first member 17 may maintain transparency to the degree that an observer can observe a virtual image from the optical element array 14 side of the second member 18, the virtual image being produced by the image 13a on the first member 17, and may be laminated in contact or not in contact with each other.

The optical element array 14 is formed by the method for forming a partially-provided optical element array performed by the system S1 or the system S2 described before. Specifically, the optical element array 14 is formed in the second partial region 12a corresponding to the first partial region 11a of the first member 17 wherein the image 13a is formed. In the example illustrated in Figures 25A and 25B , the second member is rotatably supported while the second surface 12 faces inside. However, the first member 17 and the second member 18 may be supported in a mode that the first surface 11 and the second surface 12 face in opposite directions.

When the optical element array 14 is formed according to the method for forming a partially-provided optical element array performed by the system S1 or the system S2, position adjustment is important for forming the optical element array 14 at a position corresponding to the image 13a. Accordingly, formation processing of a partially-provided optical element array, including a position adjustment step, a molding step, and a releasing step (Figure 11 : STEP1 through STEP3) may be executed while the first member 17 and the second member 18 are fixedly supported so that they cannot rotate, and after the optical element array 14 is formed, a rotatable support member 20 may be provided. A member for fixedly supporting the first member 17 and the second member 18, and the rotatable support member 20 are preferably the members which can support the first member 17 and the second member 18 in parallel. These support members may pinch the peripheries of the first member 17 and the second member 18 at several locations, or may fix the first member 17 and the second member 18 at center positions 17a and 18a.

An irregularity portion may also be formed on the first surface 11. In the molding step (Figure 11 : STEP2), the shaping surface 30a of the pressurization unit 30 as one shaping member is pressed to the second partial region 12a to mold the reversal shape of a structure of the shaping surface 30a in the second partial region 12a, and the shaping surface 60a of the stamp unit 60 as another shaping member is pressed to the first partial region 11a to mold the reversal shape of a structure of the shaping surface 60a in the first partial region 11a. In the releasing step (Figure 11 : STEP3), pressing by the pressurization unit 30 and the stamp unit 60 is released to form the optical element array 14 in the second partial region 12a and to form an irregularity portion in the first partial region 11a.

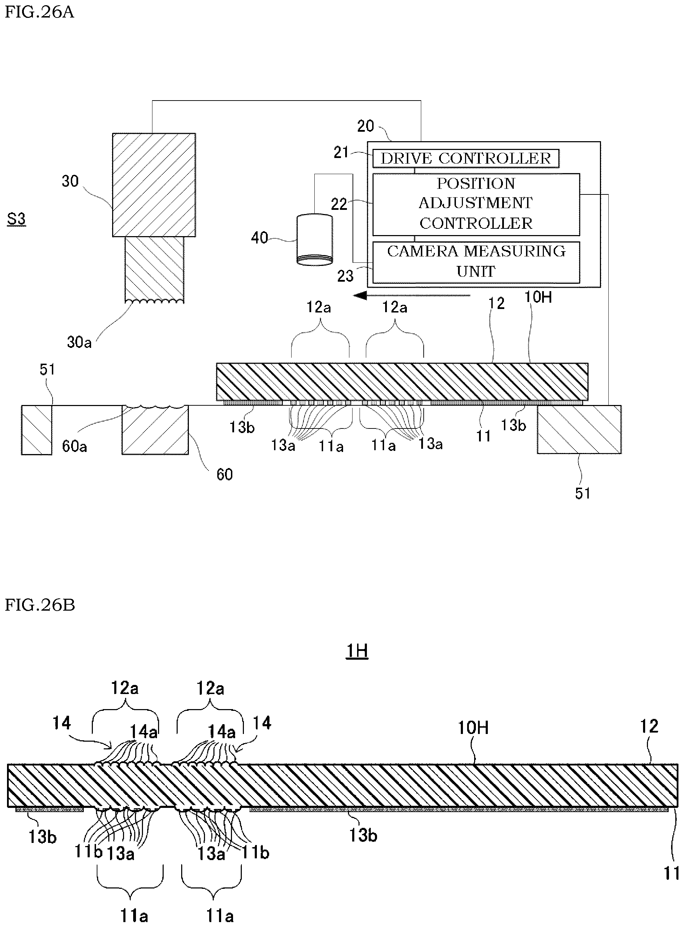

Figure 26A is an explanatory view of a system S3 for forming display bodies. The processing steps are similar to those in Figure 11 . The system S3 includes a pressurization unit 30 as one shaping member and a stamp unit 60 as another shaping member. The pressurization unit 30 is similar to the pressurization unit 30 of the system S1, and the stamp unit 60 is similar to the stamp unit 60 of the system S2. The reversal shape of an uneven shape which is desired to be formed in the second partial region 12a on the second surface 12 is structured on the shaping surface 30a of the pressurization unit 30. The reversal shape of an uneven shape which is desired to be formed in the first partial region 11 a on the first surface 11 is structured on the shaping surface 60a of the stamp unit 60.

The system S3 is constituted of a position adjustment table 51, a pressurization unit 30, a position measurement camera 40, and a control device 20 including a computer and the like that performs control of these members, and the like. Since the configuration of each of the members is similar to that of the systems S1 and S2, a description thereof is omitted.

In the example of Figure 26A , a main body unit 10H is mounted, with a first surface 11 thereof being positioned on the position adjustment table 51 side. Then, position adjustment by the control device 20 and the position measurement camera 40 is executed in the similar procedures described in the systems S1 and S2. The first partial region 11a of the main body unit 10H is positioned below the pressurization unit 30, the pressurization unit 30 is moved downward by the drive controller 21 of the control device 20, and the shaping surface 30a is pressed to the second partial region 12a corresponding to the first partial region 11 a on the first surface 11 of the main body unit 10H. At the same time, the shaping surface 60a is pressed to the first partial region 11a on the first surface 11. By sandwiching and pressurizing the main body unit 10H with the shaping surface 30a and the shaping surface 60a, the reversal shape of a structure of the shaping surface 30a is formed in the second partial region 12a, and the reversal shape of a structure on the shaping surface 60a is formed in the first partial region 11a on the first surface 11. Figure 26B is a cross sectional view of the finished display body 1H.

Furthermore, the method for forming a partially-provided optical element array performed by the system S3 is also applicable to the case where the first surface 11 and second surface 12 are made of materials different from each other.

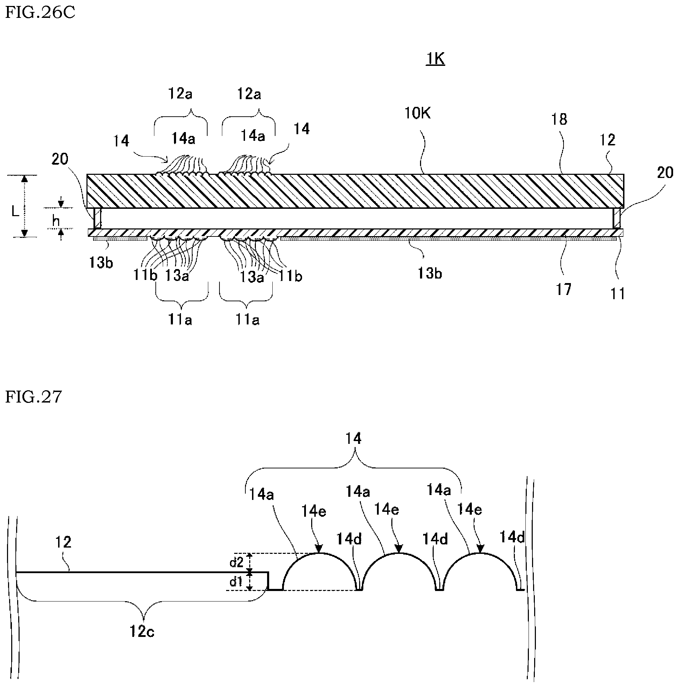

Figure 26C is a cross sectional view of a display body 1K.

The display body 1K is constituted of a first member 17, a second member 18, and a support member 20. By the system S3, the shaping surface 60a is pressed to the first partial region 11a on the first surface 11 of the main body unit 10K, while at the same time, the shaping surface 30a is pressed to the second partial region 12a corresponding to the first partial region 11a of the first surface 11. By sandwiching and pressurizing the main body unit 10K with the shaping surface 30a and the shaping surface 60a, the reversal shape of a structure of the shaping surface 60a is formed in the first partial region 11 a, and the reversal shape of a structure of the shaping surface 30a is formed in the second partial regions 12a on the second surfaces 12.

An irregularity portion 11b can also be formed in the first partial region 11 a on the first surface 11 as in the display bodies 1H and 1K described before.

### (Shape of optical element array)

Figure 27 is an enlarged cross sectional view of a main part of the optical element array formed in the second partial region on the second surface of the main body unit. The optical element array formed in the second partial region of the main body unit by the method performed by the system S1 through system S3 described above has recess portions and projecting portions. A non-formation surface of the second surface where the optical element array is not formed is positioned between a lowest part of the recess portions and a highest part of the projecting portions. Figure 27 is an enlarged cross sectional view of a main part of an optical element array which is formed from planoconvex lenses as one example.

The non-formation surface 12c where the optical element array 14 is not formed is at the same level as an original height of the second partial region before the shaping surface is pressed thereon to form the optical element array 14. As illustrated in Figure 27 , the non-formation surface 12c is positioned between the lowest part 14d of the recess portions and the highest part 14e of the protruding portions of the optical element array 14. In the example of the drawing, a difference in height between the lowest part 14d of the recess portions of the optical element array 14 and the non-formation surface 12c is d1, and a difference in height between the highest part 14e of the protruding portions of the optical element array 14 and the non-formation surface 12c is d2.

In other words, irregularities of the optical element array 14 formed in the present invention have shapes formed by arbitrary distances from the non-formation surface 12c that is at the original height.

This also applies to the case where the irregularity portion 11b is also formed in the first partial region 11a on the first surface 11 as in the case of the display bodies 1H and 1K (Figure 26A through Figure 26C). More specifically, the non-formation surface of the first surface where the irregularity portion 11b is not formed is configured to be positioned between the lowest part of the recess portions and the highest part of the protruding portions in the irregularity portion 11b.

### (Test examples)

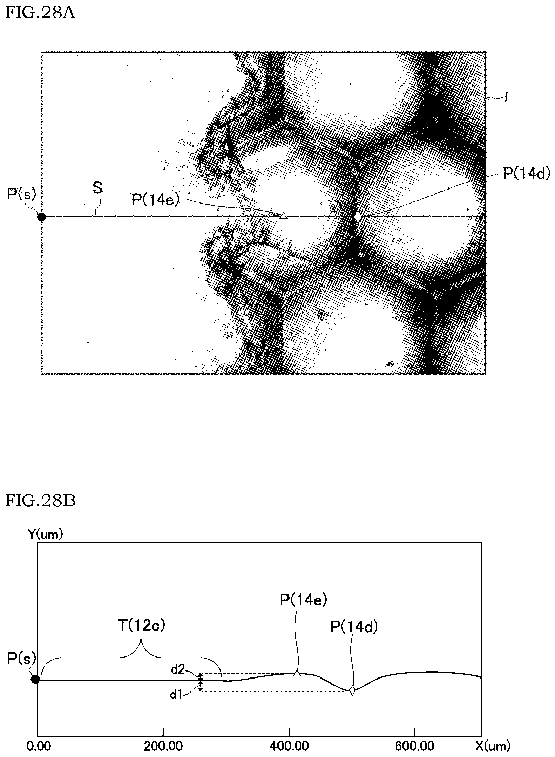

A test was performed by pressing the shaping surface of the shaping member to the second surface of the main body unit made by a transparent material to mold the reversal shape of a structure of the shaping surface in the second partial region on the second surface of the main body unit, and measuring the shape of a formed optical element array. In the test, the optical element array was formed as a honeycomb array constituted of planoconvex lenses illustrated in Figure 18(C2). Figure 28A is an expanded view of a photographed image of a main part of the formed optical element array, and Figure 28B is a measurement graph of the height of optical element array.

A Y axis of the measurement graph represents a height (µm) of the photographed image I of Figure 28A obtained when the photographed image I was scanned along a line S. An X axis represents a horizontal distance (µm) along the line S from a point P(s) (expressed as a black dot). A laser beam microscope VK8700 by KEYENCE CORP. was used for photographing and measurement.

In the measurement graph of Figure 28B , a substantially linear portion T (12c) is equivalent to the non-formation surface 12c. In the measurement graph, a point P(14d) (expressed as a white rhombus) represents a position of the lowest part 14d of the recess portions of the optical element array 14, and the point P(14e) (expressed as a white triangle) represents a position of the highest part 14e of the protruding portions of the optical element array 14.

A difference in height between the point P(14d) and the straight line portion T(12c) was measured as a distance d1, and a difference in height between the point P(14e) and the straight line portion T(12c) was measured as a distance d2. The measuring results are as follows.

| | |
|---|---|
| Distance d1 | 30 µm |
| Distance d2 | 15 µm |

The test results proved that the irregularities of the optical element array 14 formed in the present invention have shapes formed by arbitrary distances from the non-formation surface 12c that was at the original height.

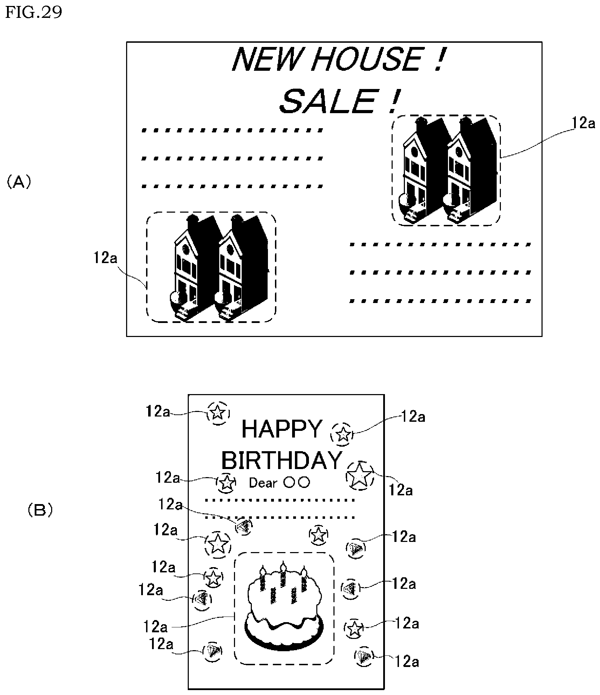

Figures 29(A) and 29(B) illustrate examples of the display body. Figure 29(A) represents an example of a pamphlet and Figure 29(B) represents an example of a card. It becomes possible to partially form optical element arrays only in the portions (the second partial regions 12a) where an optic effect by optical elements is desired to be observed, and to observe the optic effect only in the regions (inside the regions encircled by broken lines in Figure 29). Furthermore, it becomes possible to clearly display characters and the likes placed in portions other than the portions where the optic effect is desired to be observed (portions other than the second partial regions 12a). Since the optical element arrays 14 can be formed integrally with the main body unit 10, thinner pamphlets and cards can be created.

It is essential for the present invention to form at least a portion of the main body unit, from the second surface to an image on the first surface, with transparent materials such as resin and air. For example, the second surface of the main body unit may be coated with thermoformable resin of a specified thickness (for example, 0.001 mm to 0.1 mm), and the thermoformable resin may be molded to form an optical element array. In the position adjustment step, the image formed on the first surface may be confirmed from the first surface or the second surface side.

The image 13a may be confirmed from one of the first surface and the second surface in the position adjustment processing.

When an image for position adjustment is formed in a region other than the first partial region, position adjustment may be executed on the basis of the position adjustment image. The image 13b, such as a register mark, a design, and a character, can be used as a position adjustment image (another image of the present invention). The position adjustment controller 22 acquires a distance from the position adjustment image to the first partial region in advance, photographs the position adjustment image with the position measurement camera 40, and performs position adjustment processing. In the position adjustment processing, at least one of the image 13a formed in the first partial region and the position adjustment image in a portion other than the first partial region may be confirmed, before position adjustment is executed

As the pressurization units 30 and 31 in the systems S1 through S3 of the present example, devices such as heating devices, ultrasonic vibration devices, UV curable resin, ultraviolet light (electromagnetic wave) irradiation devices, or combinations thereof may be used for example. More preferably, the pressurization units 30 and 31 are constituted by the ultrasonic vibration devices. Any ultrasonic vibration device used for ultrasonic welding and the like may be used. The ultrasonic vibration device to be used may have vibration and heating performance to the degree that irregularities can be formed in the main body unit 10. High-frequency vibration devices may also be used. A vibration frequency is determined corresponding to the materials of the main body unit, the first member and the second member, irregularities to be formed, and the like. For example, a frequency band of about 18 kHz to 25 kHz is preferable. In the present example, a vibration device that vibrates in a frequency band of 18.85 kHz to 19.45 kHz is used.

### (Optical element array formation system LS1)

A description is given of the case where the method for forming a partially-provided optical element array of the present invention is applied to an optical element array formation system as one example of a display body manufacturing system, which is configured to form optical element arrays while conveying a plurality of main body units which are formed into display bodies.

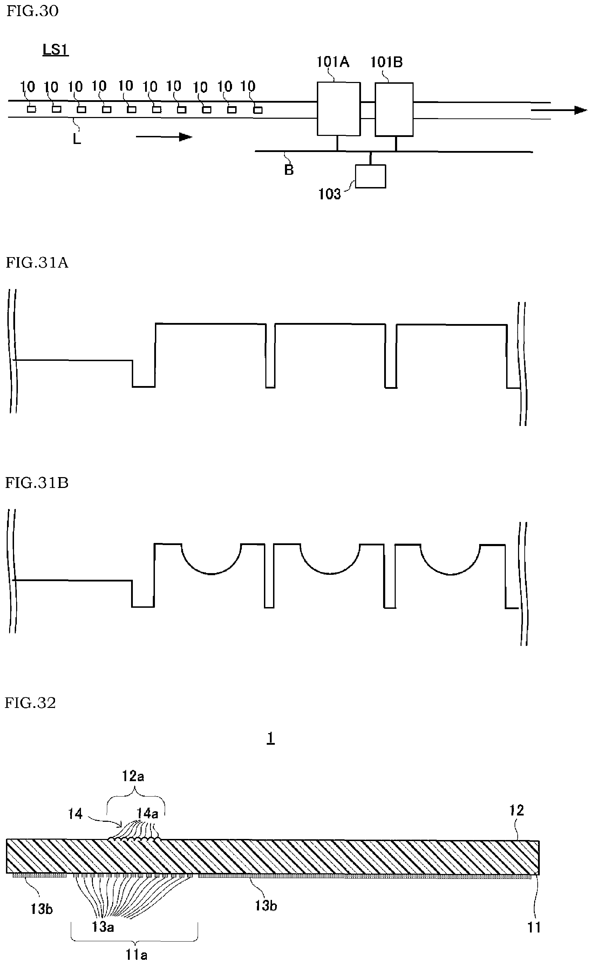

The optical element array formation system LS1 in the present example includes a plurality of processors. Figure 30 is an external structure view of the optical element array formation system LS 1.

An image 13a for producing an optic effect through interaction with each of the optical element arrays 14 is formed in a first partial region 11 a of a first surface 11 of each of the plurality of main body units 10 conveyed on a production line. The system includes processors 101A and 101B for forming optical element arrays, each of the processors being configured to confirm the image 13a, or when another image, other than the image 13a for producing the optic effect, is formed on a region other than the first partial region 11a, to confirm at least one of the another image and the image 13a and perform position adjustment, then to press a shaping surface of a shaping member to a second partial region 12a corresponding to the first partial region 11a, to mold a reversal shape of a structure of the shaping surface in the second partial region 12a, and to release pressing by the shaping member to form an optical element array in the second partial region 12a, wherein the optical element array 14 formed in the second partial region 12a has recess portions and protruding portions, a non-formation surface 12c on the second surface 12 where the optical element array is not formed is positioned between a lowest part of the recess portions and a highest part of the protruding portions, and the processors 101A and 101B sequentially perform optical element array forming processing on the conveyed main body units 10.

The optical element array formation system LS1 is constituted of the processors 101A and 101B including at least one system (hereinafter referred to as "system S") out of the aforementioned systems S1 through S3, and a system controller 103 as a controller for executing operation monitoring and engineering of the optical element array formation system LS1 via a bus B.

The system controller 103 delivers and receives information via the computer (not illustrated) and the bus B in the control device 20 included in the system S inside the processor 101A, 101B[0108] For easier understanding, detailed illustration of the system S included in the processors 101A and 101B is omitted in Figure 30 . The component members of the system S (for example, a control device 20, a drive controller 21, a position adjustment controller 22, a position adjustment table 50 (or 51), and the like) are similar to those used in description of the aforementioned system S (for example, Figures 5 through 16B , Figure 26 , or other drawings).

The plurality of main body units 10 are supplied one by one to the optical element array formation system LS 1. The supplied main body units 10 are conveyed on the production line L in an arrow direction in the drawing. Then, the conveyed main body units 10 are first subjected to first processing by the processor 101A for forming optical element arrays. Position adjustment and formation of optical element arrays in the processor 101A are executed by the system S included in the processor 101A. Next, second processing is executed in the processor 101B. Position adjustment and formation of optical element arrays in the processor 101B are executed by the system S included in the processor 101B.

A plurality of shaping members provided in each of the processors may be configured to have the same shaping surfaces, or may be configured to have shaping surfaces different from each other. The optical element arrays may be fabricated at the same position in the second partial region of the main body unit 10, or may be fabricated at different positions in the second partial region. When there are two or more second partial regions, the optical element arrays may be fabricated in each of the second partial regions.

In the present example, the shaping surface of the shaping member in the system S included in the processor 101A and the shaping surface of the shaping member in the system S included in the processor 101B are configured to be different in shape from each other, and they are used at the same position in the second partial region of the main body unit 10. Figures 31A and 31B illustrate an example in which optical element arrays are formed in the case where the processors 101A and 101B use shaping members whose shaping surfaces are different in shape from each other. Figure 31A is an enlarged cross sectional view of a main part after the first processing is performed by the processor 101A, and Figure 31B is an enlarged cross sectional view of a main part after the second processing is performed by the processor 101B. Thus, by using a plurality of processors with use of the shaping members having shaping surfaces different in shape from each other, optical element arrays of more advanced and more complicated shapes can be formed.

It is essential, for the display body including a partially-provided optical element array of the present invention described with reference to Figure 1 through Figure 31B , that an image 13a for producing the optic effect through interaction with the optical element array is formed in a first partial region 11 a on a first surface 11 of a main body, and that the optical element array 14 is formed in a second partial region 12a corresponding to the first partial region 11a on a second surface 12 opposite to the first surface 11. However, the first partial region 11a and the second partial region 12a may be different in size. For example, the present invention is also applicable to the case where the first partial region 11a and the second partial region 12a corresponding to the first partial region are different in size as illustrated in Figure 32 .

The scope of the present invention is not limited to the embodiments disclosed. The present invention may widely be applied to a thin display body which enables an optic effect by optical elements to be observed and enables characters and the like, printed or provided in other ways on a portion other than the part where the optic effect can be observed, to be clearly seen.

### Reference Signs List

1, 1A, 1B, 1C, 1D, 1E, 1F, 1G, 1H, 1K ... Display body
10 ... Main body unit
11 ... First surface
11a ... First partial region, 11b ... Irregularity portion on first surface
12 ... Second surface
12a ... Second partial region, 12c ... Non-formation surface
13a ... Image, 13b ... Image (another image is included)
14 ... Optical element array, 14a ... Optical element
14d ... Lowest part of recess portions of optical element array
14e ... Highest part of protruding portions of optical element array
17 ... First member, 18 ... Second member, 20 ... Support member
S1 ... System
30 ... Pressurization unit (shaping member), 30a ... Shaping surface
S2 ... System
60 ... Stamp unit (shaping member), 60a ... Shaping surface
S3 ... System
31 ... Pressurization unit (shaping member)
60 ... Stamp unit (shaping member), 60a ... Shaping surface
LS1 ... Optical element array formation system (display body manufacturing system)
101A, 101B ... Processor, 103 ... System controller (controller)

## Claims

1. A display body (1, 1A, 1B, 1C, 1D, 1E, 1F, 1G, 1H, 1K) including a partially-provided optical element array (14), the display body enabling an optic effect by optical elements to be observed, wherein
an image (13a) for producing the optic effect through interaction with the optical element array (14) is formed in a first partial region (11a) on a first surface (11) of a main body (10, 10E, 10F, 10H, 10K) of transparent material,
the optical element array (14) is formed in a second partial region (12a) corresponding to the first partial region (11a) on a second surface (12) opposite to the first surface (11),
the optical element array (14) has recess portions and projecting portions, and
a non-formation surface (12c) of the second surface (12) where the optical element array (14) is not formed is positioned between a lowest part (14d) of the recess portions of the optical element array (14) and a highest part (14e) of the projecting portions of the optical element array (14).

2. A display body according to claim 1, wherein
the optical element array (14) is formed by a method for forming a partially-provided optical element array, including:
a molding step (STEP2) of pressing a shaping surface (30a, 60a) of a shaping member (30, 60) to the second partial region (12a) to mold in the second partial region (12a) a reversal shape of a structure of the shaping surface (30a, 60a);
a releasing step (STEP3) of releasing pressing by the shaping member (30, 60) to form the optical element array (14) in the second partial region; and further a position adjustment step (STEP1) of performing position adjustment to press the shaping surface (30a, 60a) to the second partial region (12a), the position adjustment step (STEP1) being performed before the molding step (STEP2) and after the image (13a) is confirmed or, when another image (13b), other than the image (13a) for producing the optic effect, is formed on a region other than the first partial region (11a), the position adjustment step (STEP1) being performed before the molding step (STEP2) and after at least one of the another image (13b) and the image (13a) is confirmed.

3. The display body according to claim 2, wherein
in the position adjustment step (STEP1), the image (13a) is confirmed, or when the another image (13b) is formed, at least one of the another image (13b) and the image (13a) is confirmed, then the position adjustment is performed to press one of the shaping surfaces (30a, 60a) to the second partial region (12a) and to press the other shaping surface (30a, 60a) to the first partial region (11a),
in the molding step (STEP2), a shaping surface (30a, 60a) of one the shaping member (30, 60) is pressed to the second partial region (12a) to mold in the second partial region (12a) a reversal shape of a structure of the shaping surface (30a, 60a) of the one shaping member (30, 60), and a shaping surface (30a, 60a) of the other the shaping member (30, 60) is pressed to the first partial region (11a) to mold in the first partial region (11a) a reversal shape of a structure of the shaping surface (30a, 60a) of the other shaping member (30, 60), and
in the releasing step (STEP3), pressing by the one shaping member (30, 60) and the other shaping member (30, 60) is released to form the optical element array (14) in the second partial region (12a) and to form an irregularity portion (11b) in the first partial region (11a).

4. The display body according to any one of claims 1 to 3, wherein
the optical element array (14) is a convex lens array, and a focal plane of the optical element array (14) substantially aligns with the first surface (11) having the image formed thereon.

5. The display body according to any one of claims 1 to 4, wherein
the main body (10E, 10F, 10K) includes:
a first member (17) including the first surface (11);
a second member (18) including the second surface (12), the second member (18) being made of a transparent material; and
a support member (20) configured to support the first member (17) and the second member (18).

6. The display body according to claim 5, wherein
the support member (20) supports the first member (17) and the second member (18) in a mode that the first surface (11) and the second surface (12) face in opposite directions with a specified distance there between or in a mode that the first member (17) faces the second member (18), and supports the first member (17) and the second member (18) with space interposed therein to prevent the first member (17) and the second member (18) from coming into contact with each other.

7. The display body according to any one of claims 1 to 6, wherein
the image (13a) is a contraction image array constituted by repeating a plurality of contraction images, the contraction images being each formed by reducing an array-direction size of the optical element array of a virtual image produced by the optic effect.

8. The display body according to any one of claims 1 to 6, wherein
the image (13a) produces a stereoscopic vision or a change image through interaction with a plurality of cylindrical lenses arranged in parallel, the image being a synthesized image formed by repeating a plurality of image units each made up of a plurality of strip-like images corresponding to each of the cylindrical lenses.

9. The display body according to any one of claims 1 to 6, wherein
the image (13a) is a synthesized image formed by synthesizing a plurality of images by an integral photography method.

## Patentansprüche

1. Anzeigekörper (1, 1A, 1B, 1C, 1D, 1E, 1F, 1G, 1H, 1K), einschließlich einer teilweise bereitgestellten optischen Elementanordnung (14), wobei der Anzeigekörper einen beobachtbaren optischen Effekt von optischen Elementen ermöglicht, wobei
ein Bild (13a) zum Produzieren des optischen Effekts durch Interaktion mit der optischen Elementanordnung (14) in einem ersten partiellen Bereich (11a) auf einer ersten Fläche (11) eines Hauptkörpers (10, 10E, 10F, 10H, 10K) transparenten Materials gebildet wird, wobei die optische Elementanordnung (14) in einem zweiten partiellen Bereich (12a) gebildet wird, der dem ersten partiellen Bereich (11a) auf einer zweiten Fläche (12) gegenüber der ersten Fläche (11) entspricht,
wobei die optische Elementanordnung (14) vertiefte Abschnitte und hervorstehende Abschnitte aufweist, und
eine Nicht-Bildungs-Fläche (12c) der zweiten Fläche (12), auf der die optische Elementanordnung (14) nicht gebildet wird, zwischen einem untersten Teil (14d) der vertieften Abschnitte der optischen Elementanordnung (14) und einem höchsten Teil (14e) der hervorstehenden Abschnitte der optischen Elementanordnung (14) positioniert ist.

2. Anzeigekörper nach Anspruch 1, wobei
die optische Elementanordnung (14) durch ein Verfahren zur Bildung einer teilweise bereitgestellten optischen Elementanordnung gebildet wird, einschließlich:
eines Formungsschritts (STEP2) des Pressens einer Formfläche (30a, 60a) eines Formelements (30, 60) auf den zweiten partiellen Bereich (12a) zum Formen in dem zweiten partiellen Bereich (12a) einer Umkehrform einer Struktur der Formfläche (30a, 60a);
eines Löseschritts (STEP3) des Lösens des Pressens durch das Formelement (30, 60) zum Bilden der optischen Elementanordnung (14) in der zweiten partiellen Region; und ferner eines Positionsangleichungsschritts (STEP1) des Durchführens von Positionsangleichung zum Pressen der Formfläche (30a, 60a) auf den zweiten partiellen Bereich (12a), wobei der Positionsangleichungsschritt (STEP1) vor dem Formschritt (STEP2) durchgeführt wird, und
nachdem das Bild (13a) bestätigt ist oder, wenn ein anderes Bild (13b) als das Bild (13a) zum Produzieren des optischen Effekts auf einem anderen Bereich als dem ersten partiellen Bereich (11a) gebildet wird, wird der Positionsangleichungsschritt (STEP1) vor dem Formschritt (STEP2) und nach mindestens einem anderen Bild (13b) durchgeführt und das Bild (13a) wird bestätigt.

3. Anzeigekörper nach Anspruch 2, wobei
in dem Positionsangleichungsschritt (STEP1) das Bild (13a) bestätigt wird, oder wenn das andere Bild (13b) gebildet wird, das andere Bild (13b) und/oder das Bild (13a) bestätigt wird, dann wird die Positionsangleichung durchgeführt, um eine der Formflächen (30a, 60a) auf den zweiten partiellen Bereich (12a) zu pressen und die andere Formfläche (30a, 60a) auf den ersten partiellen Bereich (11a) zu pressen, in dem Formschritt (STEP2) eine Formfläche (30a, 60a) eines Formelements (30, 60) auf den zweiten partiellen Bereich (12a) gepresst wird, um in dem zweiten partiellen Bereich (12a) eine Umkehrform einer Struktur der Formfläche (30a, 60a) des einen Formelements (30, 60) zu bilden, und eine Formfläche (30a, 60a) des anderen Formelements (30, 60) wird auf den ersten partiellen Bereich (11a) gepresst, um in der ersten partiellen Region (11a) eine Umkehrform einer Struktur der Formfläche (30a, 60a) des anderen Formelements (30, 60) zu bilden, und
in dem Löseschritt (STEP3) Pressen durch das eine Formelement (30, 60) und das andere Formelement (30, 60) wird gelöst, um die optische Elementanordnung (14) in dem zweiten partiellen Bereich (12a) zu bilden und um einen Unregelmäßigkeitsabschnitt (11b) in dem ersten partiellen Bereich (11a) zu bilden.

4. Anzeigekörper nach einem der Ansprüche 1 bis 3, wobei
die optische Elementanordnung (14) eine Konvexlinsenanordnung ist und eine Fokusebene der optischen Elementanordnung (14) im Wesentlichen auf die erste Fläche (11), auf der das Bild gebildet wird, ausgerichtet ist.

5. Anzeigekörper nach einem der Ansprüche 1 bis 4, wobei
der Hauptkörper (10E, 10F, 10K) enthält:
ein erstes Element (17), einschließlich der ersten Fläche (11);
ein zweites Element (18), einschließlich der zweiten Fläche (12), wobei das zweite Element (18) aus einem transparenten Material hergestellt ist; und
ein Stützelement (20), das konfiguriert ist, das erste Element (17) und das zweite Element (18) zu stützen.

6. Anzeigekörper nach Anspruch 5, wobei
das Stützelement (20) das erste Element (17) und das zweite Element (18) auf eine Weise stützt, dass die erste Fläche (11) und die zweite Fläche (12) in entgegengesetzte Richtungen mit einer festgelegten Distanz dazwischen weisen, oder auf eine Weise, dass das erste Element (17) dem zweiten Element (18) zugewandt ist und das erste Element (17) stützt und das zweite Element (18) mit Raum darin dazwischengesetzt ist, um zu verhindern, dass das erste Element (17) und das zweite Element (18) miteinander in Kontakt geraten.

7. Anzeigekörper nach einem der Ansprüche 1 bis 6, wobei
das Bild (13a) eine Kontraktionsbildanordnung ist, die durch Wiederholen mehrerer Kontraktionsbilder konstituiert wird, wobei die Kontraktionsbilder jeweils durch Reduzieren einer Anordnungsrichtungsgröße der optischen Elementanordnung eines virtuellen Bildes, das von dem optischen Effekt erzeugt wird, gebildet wird.

8. Anzeigekörper nach einem der Ansprüche 1 bis 6, wobei
das Bild (13a) eine stereoskopische Ansicht oder ein Veränderungsbild durch Interaktion mit mehreren, parallel angeordneten zylindrischen Linsen produziert, wobei das Bild ein synthetisiertes Bild ist, das durch Wiederholen mehrerer Bildeinheiten, die jeweils aus mehreren streifenähnlichen Bildern, die jeder der zylindrischen Linsen entsprechen, bestehen, gebildet wird.

9. Anzeigekörper nach einem der Ansprüche 1 bis 6, wobei
das Bild (13a) ein synthetisiertes Bild ist, das durch Synthetisieren mehrerer Bilder durch ein integrales Fotografieverfahren gebildet wird.

## Revendications

1. Corps d'affichage (1, 1A, 1B, 1C, 1D, 1E, 1F, 1G, 1H, 1K) incluant une matrice d'élément optique prévue partiellement (14), le corps d'affichage permettant qu'un effet optique par des éléments optiques soit observé, dans lequel
une image (13a) pour produire l'effet optique par l'intermédiaire d'une interaction avec la matrice d'élément optique (14) est formée dans une première région partielle (11a) sur une première surface (11) d'un corps principal (10,10E,10F,10H,10K) de matériau transparent,
la matrice d'élément optique (14) est formée dans une seconde région partielle (12a) correspondant à la première région partielle (11a) sur une seconde surface (12) opposée à la première surface (11),
la matrice d'élément optique (14) a des portions évidées et des portions protubérantes et une surface de non formation (12c) de la seconde surface (12) où la matrice d'élément optique (14) n'est pas formée est positionnée entre une partie la plus basse (14d) des portions évidées de la matrice d'élément optique (14) et une partie la plus haute (14e) des portions protubérantes de la matrice d'élément optique (14).

2. Corps d'affichage selon la revendication 1, dans lequel
la matrice d'élément optique (14) est formée par un procédé de formation d'une matrice d'élément optique prévue partiellement, incluant :
une étape de moulage (STEP1) de pressage d'une surface de façonnage (30a,60a) d'un élément de façonnage (30,60) sur la seconde région partielle (12a)pour mouler dans la seconde région partielle (12a) une forme inversée d'une structure de la surface de façonnage (30a,60a) ;
une étape de démoulage (STEP3) pour démouler par pressage par l'élément de façonnage (30,60) afin de former la matrice d'élément optique (14) dans la seconde région partielle ; et en outre
une étape d'ajustement de position (STEP1) pour effectuer un ajustement de position afin de presser la surface de façonnage (30a,60a) sur la seconde région partielle (12a), l'étape d'ajustement de position (STEP1) étant effectuée avant l'étape de moulage (STEP2) et après que l'image (13a) est confirmée ou, lorsqu'une autre image (13b), autre que l'image (13a) pour produire l'effet optique, est formée sur une région autre que la première région partielle (11a), l'étape d'ajustement de position (STEP1) étant effectuée avant l'étape de moulage (STEP2) et après qu'au moins une de l'autre image (13b) et de l'image (13b) est confirmée.

3. Corps d'affichage selon la revendication 2, dans lequel
pendant l'étape d'ajustement de position (STEP1), l'image (13a) est confirmée, ou lorsqu'une autre image (13b) est formée, au moins une de l'autre image (13b) et l'image (13a) est confirmée, alors l'ajustement de position est effectué afin de presser une des surfaces de façonnage (30a,60a) sur la seconde région partielle (12a) et presser l'autre surface de façonnage (30a,60a) sur la première région partielle (11a), pendant l'étape de moulage (STEP2), une surface de façonnage (30a,60a) d'un élément de façonnage (30,60) est pressée sur la seconde région partielle (12a) afin de mouler dans la seconde région partielle (12a) une forme inversée d'une structure de la surface de façonnage (30a,60a) d'un élément de façonnage (30,60), et une surface de façonnage (30a,60a) de l'autre élément de façonnage (60,60) est pressée sur la première région partielle (11a) afin de mouler dans la première région partielle (11a) une forme inversée d'une structure de la surface de façonnage (30a,60a) de l'autre élément de façonnage (30,60) et pendant l'étape de démoulage (STEP3), le pressage par un élément de façonnage (30,60) et l'autre élément de façonnage (30,60) est démoulé afin de former la matrice d'élément optique (14) dans la seconde région partielle (12a) et formée une portion d'irrégularité (11b) dans la première région partielle (11a).

4. Corps d'affichage selon une quelconque des revendications 1 à 3, dans lequel
la matrice d'élément optique (14) est une matrice de lentille convexe et un plan focal de la matrice d'élément optique (14) s'aligne substantiellement avec la première surface (11) sur laquelle l'image est formée.

5. Corps d'affichage selon une quelconque des revendications 1 à 4, dans lequel
le corps principal (10E,10F,10K) inclut :
un premier élément (17) incluant la première surface (11) ;
un second élément (18) incluant la seconde surface (12), le second élément (18) étant constitué d'un matériau transparent ; et
un élément de soutien (20) configuré pour soutenir le premier élément (17) et le second élément (18).

6. Corps d'affichage selon la revendication 5, dans lequel
l'élément de soutien (20) soutient le premier élément (17) et le second élément (18) dans un mode où la première surface (11) et la seconde surface (12) se font face dans des directions opposées avec une distance spécifiée entre elles ou dans un mode où le premier élément (17) fait face au second élément (18) et soutient le premier élément (17) et le second élément (18) avec un espace interposé afin d'empêcher le premier élément (17) et le second élément (18) d'entrer en contact l'un avec l'autre.

7. Corps d'affichage selon une quelconque des revendications 1 à 6, dans lequel
l'image (13a) est une matrice d'image de contraction constituée en répétant une pluralité d'images de contraction, les images de contraction étant chacune formées en réduisant une taille de direction de matrice de la matrice d'élément optique d'une image virtuelle produite par l'effet optique.

8. Corps d'affichage selon une quelconque des revendications 1 à 6, dans lequel
l'image (13a) produit une vision stéréoscopique ou une image variable par l'interaction avec une pluralité de lentilles cylindriques agencées en parallèle, l'image étant une image synthétisée formée en répétant une pluralité d'unités d'image composées chacune d'une pluralité d'images en forme de bande correspondant à chacune des lentilles cylindriques.

9. Corps d'affichage selon une quelconque des revendications 1 à 6, dans lequel
l'image (13a) est une image synthétisée formée en synthétisant une pluralité d'images par un procédé de photographie intégral.
